# EUROPÄISCHE PATENTSCHRIFT

(11) **EP 3 949 682 B1**
(45) Veröffentlichungstag und Bekanntmachung des Hinweises auf die Patenterteilung: **22.11.2023**
(21) Anmeldenummer: 20717795.7
(22) Anmeldetag: 31.03.2020
(51) Int. Cl.: H04W 88/06, H04W 88/10, H04B 1/713, H04W 72/12, H04W 16/14

(54) **SYSTEMKOMBINATION AUS EINEM ASYNCHRONEN UND EINEM SYNCHRONEN FUNKSYSTEM**
SYSTEM COMBINATION OF AN ASYNCHRONOUS AND A SYNCHRONOUS RADIO SYSTEM
COMBINAISON DE SYSTÈME D'UN SYSTÈME RADIO ASYNCHRONE ET SYNCHRONE

(30) Priorität: 05.04.2019 DE 102019204916
(43) Veröffentlichungstag der Anmeldung: 09.02.2022
(73) Patentinhaber: Fraunhofer-Gesellschaft zur Förderung der angewandten Forschung e.V., 80686 München (DE)
(72) Erfinder: KILIAN, Gerd, 91058 Erlangen (DE); BERNHARD, Josef, 91058 Erlangen (DE); SOLLER, Dominik, 91058 Erlangen (DE); ROHMER, Günter, 91058 Erlangen (DE); NACHTRAB, Frank, 91058 Erlangen (DE); KNEISSL, Jakob, 91058 Erlangen (DE); ERETH, Stefan, 91058 Erlangen (DE); SCHLICHT, Michael, 91058 Erlangen (DE)
(74) Vertreter: Schlenker, Julian
(86) Internationale Anmeldenummer: PCT/EP2020/059034
(87) Internationale Veröffentlichungsnummer: WO 2020/201244

(56) Entgegenhaltungen:
- EP-A1- 1 274 194
- WO-A1-01/24457
- WO-A2-2008/135975
- DE-A1-102016 220 882

## Beschreibung

Ausführungsbeispiele der vorliegenden Erfindung beziehen sich auf einen Teilnehmer eines Kommunikationssystems, und im speziellen auf einen Teilnehmer, der Daten unter Verwendung zweier unterschiedlicher Funknetzte überträgt. Weitere Ausführungsbeispiele beziehen sich auf eine entsprechende Basisstation, ein entsprechendes Kommunikationssystem sowie auf entsprechende Verfahren. Manche Ausführungsbeispiele beziehen sich auf eine Systemkombination aus einem asynchronen und synchronen Funksystem.

Bei herkömmlichen loT-Systemen (loT = Internet of Things, dt. Internet der Dinge) gibt es zwei Möglichkeiten einer Systemrealisierung. Die Datenübertragung kann entweder synchron oder asynchron erfolgen.

Beispiele für asynchrone Systeme sind LoRa (LoRa = Long Range Wide Area Network, dt. ein Niedrigenergieweitverkehrsnetzwerk) und MIOTY [1], [2], [3], [6]. Diese Systeme haben den Vorteil einer hohen Energieeffizienz auf Seiten der Endgeräte, da diese zu beliebigen Zeitpunkten ihre Daten an die jeweilige Basisstation senden können, ohne vorher den Kanal abzuhören oder sich mit der jeweiligen Basisstation synchronisieren müssen.

Durch den asynchronen Zugriff auf den Kanal kann es jedoch bei asynchronen Systemen zu Störungen mit anderen Teilnehmern kommen, so dass die Nachricht unter Umständen nicht korrekt am Empfänger decodiert werden kann. Für diesen Anwendungsfall wurde das sogenannte Telegrammaufteilungs-Verfahren (engl. Telegram-Splitting-Multiple-Access, TSMA) [1], [2], [3], [6] entwickelt, mit welchem diese Störungen toleriert werden können.

Ein Vorteil der asynchronen Übertragung ist zudem die kurze Latenz, mit welcher die Übertragung einer Nachricht von einem Teilnehmer zu der Basisstation erfolgen kann. Dies begründet sich im asynchronen Verfahren, da der Teilnehmer direkt ohne eventuelle Wartezeiten durch Koordinierung auf den Kanal zugreifen kann.

Bedingt durch die hohe Energieeffizienz und den asynchronen Zugriff der Teilnehmer auf den Kanal ist es in den meisten Systemen dieser Art jedoch nicht möglich zu beliebigen Zeitpunkten eine Nachricht von der Basisstation an den/die Teilnehmer (Downlink) zu senden.

Vorteile eines synchronen Systems sind die vorab berechenbaren Latzenzzeiten, da der Basisstation zu jedem Zeitpunkt bekannt ist, wann ein Teilnehmer Daten an die Basisstation senden kann und auch wann die Basisstation jedem Teilnehmer Daten senden kann.

Im Vergleich zu einem asynchronen System sind somit die Downlink Latenzzeiten berechenbar und nicht nur vom Teilnehmer abhängig. Außerdem ist es möglich mehr Teilnehmer im Vergleich zum asynchronen System im Downlink anzusprechen. So sind beispielsweise im asynchronen System keine 300 Teilnehmer im Downlink in 30 s möglich.

In [7] wird ein Übertragungsverfahren zur drahtlosen Übertragung von Daten in einem Kommunikationssystem (z.B. einem Sensornetzwerk oder Telemetriesystem) beschrieben. Das Verfahren umfasst einen Schritt des Übertragens der Daten unter Verwendung von zumindest zwei Zeitsprungmustern und/oder Frequenzsprungmustern, wobei ein zweites Muster der zumindest zwei Muster eine in der Zeit und/oder in der Frequenz verschobene Version eines ersten Musters der zumindest zwei Muster ist.

Der vorliegenden Erfindung liegt somit die Aufgabe zugrunde, ein Konzept zu schaffen, welches eine Auslastung des Kommunikationskanals bei einem Kommunikationssystem (z.B. loT-System) mit einer Vielzahl von batteriebetriebenen oder Energy-Harvesting basierten Teilnehmern verbessert.

Diese Aufgabe wird durch die unabhängigen Patentansprüche gelöst.

Vorteilhafte Weiterbildungen finden sich in den abhängigen Patentansprüchen.

Ausführungsbeispiele schaffen einen Teilnehmer eines Kommunikationssystems, wobei der Teilnehmer konfiguriert ist, um Daten unter Verwendung eines ersten Funknetzes und eines zweiten Funknetzes in einem [z.B. im selben] Frequenzband [z.B. welches von einer Mehrzahl von Kommunikationssystemen genutzt wird; z.B. dem ISM Band] zu übertragen [z.B. zu senden und/oder zu empfangen] wobei der Teilnehmer konfiguriert ist, um in dem ersten Funknetz Daten entsprechend eines ersten Zeit- und/oder Frequenzsprungmusters in einem ersten Frequenzbereich des Frequenzbands zu übertragen, wobei der Teilnehmer konfiguriert ist, um in dem zweiten Funknetz Daten entsprechend eines zweiten Zeit- und/oder Frequenzsprungmusters in einem zweiten Frequenzbereich des Frequenzbands zu übertragen, wobei das erste Zeit- und/oder Frequenzsprungmuster und das zweite Zeit- und/oder Frequenzsprungmuster unterschiedlich sind, wobei sich der erste Frequenzbereich und der zweite Frequenzbereich zumindest teilweise überlappen, wobei das erste Funknetz ein asynchrones Funknetz ist, in dem Teilnehmer des Kommunikationssystems Daten zu beliebigen Zeitpunkten an die Basisstation senden können, wobei das zweite Funknetz ein synchrones Funknetz ist, in dem den Teilnehmern exklusive Ressourcen zur Übertragung der Daten zugewiesen sind, wobei der Teilnehmer konfiguriert ist, um eine asynchrone Uplink-Datenübertragung unter Verwendung des ersten Funknetzes zu einer Basisstation des Kommunikationssystems zu senden und um zeitlich synchronisiert zu der gesendeten Uplink-Datenübertragung eine Downlink-Datenübertragung unter Verwendung des ersten Funknetzes von der Basisstation zu empfangen, wobei die Downlink-Datenübertragung eine Signalisierungsinformation aufweist, wobei der Teilnehmer konfiguriert ist, um basierend auf der Signalisierungsinformation zumindest eine Bake, die von der Basisstation (104) unter Verwendung des zweiten Funknetzes gesendet wird, zu empfangen, um in das zweite Funknetz zu wechseln, wobei die Signalisierungsinformation eine Information über einen Zeitpunkt und/oder über einen Frequenzkanal der zumindest einen Bake aufweist.

Bei Ausführungsbeispielen kann der Teilnehmer konfiguriert sein, um während des Betriebs zwischen einem ersten Betriebsmodus, in dem der Teilnehmer Daten unter Verwendung des ersten Funknetzes überträgt, und einem zweiten Betriebsmodus, in dem der Teilnehmer Daten unter Verwendung des zweiten Funknetzes überträgt, zu wechseln.

Bei Ausführungsbeispielen kann der Teilnehmer konfiguriert sein, um einen Betriebsmodus aus dem ersten Betriebsmodus und dem zweiten Betriebsmodus in Abhängigkeit von einer empfangenen Signalisierungsinformation [z.B. die den zu verwendenden Betriebsmodus aus dem ersten Betriebsmodus und dem zweiten Betriebsmodus signalisiert] auszuwählen.

Beispielsweise kann die Signalisierungsinformation von einer Basisstation oder einer zentralen Steuereinheit des Kommunikationssystems ausgesendet werden.

Bei Ausführungsbeispielen kann der Teilnehmer konfiguriert sein, um einen Betriebsmodus aus dem ersten Betriebsmodus und dem zweiten Betriebsmodus in Abhängigkeit von zumindest einer Übertragungsanforderung [z.B. Latenz, Übertragungssicherheit, QoS] der zu übertragenen Daten und/oder in Abhängigkeit von zumindest einem Betriebsparameter [z.B. zur Verfügung stehende Energie] des Teilnehmers auszuwählen.

Beispielsweise kann der Teilnehmer konfiguriert sein, um den Betriebsmodus [z.B. die Verwendung des ersten oder zweiten Funknetzes] für eine Übertragung so zu wählen, dass die Anforderungen an z.B. Latenz, Übertragungssicherheit, Rückantwortmöglichkeit oder adressierten Empfängerkreis [z.B. bei Punkt-zu-Mehrpunkt-Übertragungen] bestmöglich erfüllt werden können.

Bei Ausführungsbeispielen kann der Teilnehmer konfiguriert sein, um eine Signalisierungsinformation, die eine Verfügbarkeit des ersten und/oder zweiten Funknetzes [z.B. zeitliche Einschränkungen] signalisiert, unter Verwendung des ersten und/oder zweiten Funknetzes [z.B. unter Verwendung des jeweils anderen Funknetzes] zu erhalten, wobei der Teilnehmer konfiguriert ist, um basierend auf der Signalisierungsinformation einen Betriebsmodus [z.B. entsprechend der zeitlichen Verfügbarkeit eines Funknetzes] aus dem ersten Betriebsmodus und dem zweiten Betriebsmodus auszuwählen.

Beispielsweise kann die Signalisierungsinformation von einer Basisstation oder einer zentralen Steuereinheit des Kommunikationssystems ausgesendet werden.

Bei Ausführungsbeispielen kann der Teilnehmer konfiguriert sein, um eine zur Kommunikation in dem zweiten Funknetz erforderliche Informationen [z.B. Systemparameter des zweiten Funknetzes, wie z.B. der zweite Frequenzbereich, das zweite Zeit- und/oder Frequenzsprungmuster, usw.] unter Verwendung des ersten Funknetzes [z.B. bei Anmeldung in dem ersten Funknetz] zu erhalten.

Bei Ausführungsbeispielen kann der Teilnehmer konfiguriert sein, um eine zur Kommunikation in dem ersten Funknetz erforderliche Informationen [z.B. Systemparameter des ersten Funknetzes, wie z.B. der erste Frequenzbereich, das erste Zeit- und/oder Frequenzsprungmuster, usw.] unter Verwendung des zweiten Funknetzes [z.B. bei Anmeldung in dem zweiten Funknetz] zu erhalten.

Bei Ausführungsbeispielen kann der Teilnehmer konfiguriert sein, um Daten zu einer Basisstation oder einem anderen Teilnehmer des Kommunikationssystems zu einem ersten Zeitpunkt unter Verwendung des ersten Funknetzes zu übertragen und um Daten zu derselben Basisstation oder demselben anderen Teilnehmer zu einem zweiten Zeitpunkt unter Verwendung des zweiten Funknetzes zu übertragen [z.B. wobei der erste Zeitpunkt und der zweite Zeitpunkt unterschiedlich sind].

Bei Ausführungsbeispielen kann der Teilnehmer konfiguriert sein, um Daten unter Verwendung des ersten Funknetzes zu senden und um Daten unter Verwendung des zweiten Funknetzes zu empfangen.

Bei Ausführungsbeispielen kann der Teilnehmer konfiguriert sein, um Daten unter Verwendung des zweiten Funknetzes zu senden und um Daten unter Verwendung des ersten Funknetzes zu empfangen.

Bei Ausführungsbeispielen kann das erste Funknetz ein asynchrones Funknetz sein.

Bei Ausführungsbeispielen kann das zweite Funknetz ein synchrones Funknetz sein.

Bei Ausführungsbeispielen kann der Teilnehmer konfiguriert sein, um eine asynchrone Uplink-Datenübertragung unter Verwendung des ersten Funknetzes zu einer Basisstation des Kommunikationssystems zu senden und um zeitlich synchronisiert zu der gesendeten Uplink-Datenübertragung eine Downlink-Datenübertragung unter Verwendung des ersten Funknetzes von der Basisstation zu empfangen, wobei die Downlink-Datenübertragung eine Signalisierungsinformation aufweist, wobei der Teilnehmer konfiguriert sein kann, um basierend auf der Signalisierungsinformation zumindest eine Bake, die von der Basisstation unter Verwendung des zweiten Funknetzes gesendet wird, zu empfangen, um in das zweite Funknetz zu wechseln.

Bei Ausführungsbeispielen kann die Signalisierungsinformation eine Information über einen Zeitpunkt der zumindest einen Bake aufweisen.

Bei Ausführungsbeispielen kann die Signalisierungsinformation eine Information über einen Frequenzkanal der zumindest einen Bake aufweisen.

Bei Ausführungsbeispielen kann die Signalisierungsinformation eine Information über zumindest einen Baken-Übertragungsparameter [z.B. Systemparameter] aufweisen, wobei der zumindest eine Baken-Übertragungsparameter zumindest einer aus
- einem Zeit-/Frequenzsprungmuster der zumindest einen Bake,
- einer Berechnungsvorschrift für die Zeitpunkte und/oder Frequenzkanäle und/oder Zeit-/Frequenzsprungmuster der Übertragung der zumindest einen Bake,
- einem zeitlichen Abstand zwischen aufeinanderfolgenden Übertragungen der Bake,
- einer Berechnungsvorschrift für die zeitlichen Abstände zwischen aufeinanderfolgenden Übertragungen der Bake,
- einem kryptographischen Schlüssel für die Übertragung der Bake, und
- einer Berechnungsvorschrift zur Erzeugung eines kryptographischen Schlüssels für die Übertragung der zumindest einen Bake,
   ist.

Bei Ausführungsbeispielen kann der Teilnehmer konfiguriert sein, um bei Nichtempfang mindestens einer Bake, die unter Verwendung des zweiten Funksystems übertragen wird, eine erneute Uplink-Datenübertragung unter Verwendung des ersten Funknetzes zu der Basisstation zu senden und um zeitlich synchronisiert zu der gesendeten Uplink-Datenübertragung eine weitere Downlink-Datenübertragung unter Verwendung des ersten Funknetzes von der Basisstation zu empfangen, wobei die weitere Downlink-Datenübertragung eine Signalisierungsinformation aufweist, wobei der Teilnehmer konfiguriert sein kann, um basierend auf der Signalisierungsinformation erneut zumindest eine Bake, die von der Basisstation unter Verwendung des zweiten Funknetzes gesendet wird, zu empfangen, um erneut in das zweite Funknetz zu wechseln.

Bei Ausführungsbeispielen können das erste Funknetz und das zweite Funknetz auf unterschiedlichen Funkstandards basieren.

Bei Ausführungsbeispielen kann das erste Funknetz auf dem in ETSI TS 103 357 spezifizierten Funknetz basieren.

Bei Ausführungsbeispielen kann das zweite Funknetz auf dem in IEEE 802.15.4w spezifizierten Funknetz basieren.

Bei Ausführungsbeispielen kann der Teilnehmer konfiguriert sein, um einen individuellen kryptographischen Schlüssel für die Verwendung des ersten Funknetzes [z.B. mit der Basisstation oder einer anderen zentralen Steuereinheit des Kommunikationssystems] auszuhandeln, oder wobei der Teilnehmer einen vorab bekannten individuellen kryptographischen Schlüssel für die Verwendung des ersten Funknetzes besitzt, wobei der Teilnehmer konfiguriert sein kann, um einen kryptographischen Schlüssel für die Verwendung des zweiten Funknetzes über eine verschlüsselte Übertragung unter Verwendung des ersten Funknetzes zu empfangen.

Bei Ausführungsbeispielen können die Daten ein Datenpaket umfassen, wobei der Teilnehmer konfiguriert ist, um das Datenpaket [z.B. der physikalischen Schicht im OSI Modell] aufgeteilt auf eine Mehrzahl von Sub-Datenpaketen zu übertragen [z.B. zu senden und/oder zu empfangen], wobei die Mehrzahl von Sub-Datenpaketen jeweils kürzer sind als das Datenpaket, wobei der Teilnehmer konfiguriert ist, um die Mehrzahl von Sub-Datenpaketen entsprechend des jeweiligen Zeit- und/oder Frequenzsprungmusters zu übertragen [z.B. wobei die Mehrzahl von Sub-Datenpaketen nicht zusammenhängend übertragen werden, z.B. sondern mit übertragungsfreien Intervallen zwischen den Sub-Datenpaketen].

Bei Ausführungsbeispielen kann ein Zugriff auf das Frequenzband durch das erste Funknetz basierend auf einem ersten Kanalzugriffsmuster erfolgen, das eine erste verwendbare frequenz- und/oder zeitsprungbasierte Belegung des Frequenzbands angibt, wobei ein Zugriff auf das Frequenzband durch das zweite Funknetz basierend auf einem zweiten Kanalzugriffsmuster erfolgt, das eine zweite verwendbare frequenz- und/oder zeitsprungbasierte Belegung des Frequenzbands angibt, wobei das erste Kanalzugriffsmuster und das zweite Kanalzugriffsmuster unterschiedlich sind [z.B. wobei sich die eine erste verwendbare frequenz- und/oder zeitsprungbasierte Belegung des Frequenzbands von der zweiten verwendbaren frequenz- und/oder zeitsprungbasierte Belegung des Frequenzbands unterscheidet], wobei der Teilnehmer konfiguriert ein kann, um in dem ersten Funknetz die Daten entsprechend des ersten Zeit- und/oder Frequenzsprungmusters zu übertragen [zu senden und/oder zu empfangen], wobei das erste Zeit- und/oder Frequenzsprungmuster eine [z.B. echte] Teilmenge der durch das erste Kanalzugriffsmuster angegebenen verwendbaren frequenz- und/oder zeitsprungbasierte Belegung des Frequenzbands angibt, wobei der Teilnehmer konfiguriert sein kann, um in dem zweiten Funknetz die Daten entsprechend des zweiten Zeit- und/oder Frequenzsprungmusters zu übertragen, wobei das zweite Zeit- und/oder Frequenzsprungmuster eine [z.B. echte] Teilmenge der durch das zweite Kanalzugriffsmuster angegebenen verwendbaren frequenz- und/oder zeitsprungbasierte Belegung des Frequenzbands angibt.

Weitere Ausführungsbeispiele schaffen eine Basisstation, wobei die Basisstation konfiguriert ist, um Daten unter Verwendung eines ersten Funknetzes und eines zweiten Funknetzes in einem [z.B. im selben] Frequenzband [z.B. welches von einer Mehrzahl von Kommunikationssystemen genutzt wird; z.B. dem ISM Band] zu übertragen [z.B. zu senden und/oder zu empfangen], wobei die Basisstation konfiguriert ist, um in dem ersten Funknetz Daten entsprechend eines ersten Zeit- und/oder Frequenzsprungmusters in einem ersten Frequenzbereich des Frequenzbands zu übertragen, wobei die Basisstation konfiguriert ist, um in dem zweiten Funknetz Daten entsprechend eines zweiten Zeit- und/oder Frequenzsprungmusters in einem zweiten Frequenzbereich des Frequenzbands zu übertragen, wobei das erste Zeit- und/oder Frequenzsprungmuster und das zweite Zeit- und/oder Frequenzsprungmuster unterschiedlich sind, wobei sich der erste Frequenzbereich und der zweite Frequenzbereich zumindest teilweise überlappen, wobei das erste Funknetz ein asynchrones Funknetz ist, in dem Teilnehmer des Kommunikationssystems Daten zu beliebigen Zeitpunkten an die Basisstation senden können, wobei das zweite Funknetz ein synchrones Funknetz ist, in dem die Basisstation den Teilnehmern des Kommunikationssystems exklusive Ressourcen zur Übertragung der Daten zuweist, wobei die Basisstation konfiguriert ist, um eine asynchrone Uplink-Datenübertragung von einem Teilnehmer des Kommunikationssystems unter Verwendung des ersten Funknetzes zu empfangen und um zeitlich synchronisiert zu der empfangenen Uplink-Datenübertragung eine Downlink-Datenübertragung zu dem Teilnehmer unter Verwendung des ersten Funknetzes zu senden, wobei die Downlink-Datenübertragung eine Signalisierungsinformation über eine Übertragung zumindest einer Bake aufweist, wobei die Basisstation konfiguriert ist, um die zumindest eine Bake zur Synchronisation von Teilnehmern des zweiten Funknetzes unter Verwendung des zweiten Funknetzes zu senden, wobei die Signalisierungsinformation eine Information über einen Zeitpunkt und/oder über einen Frequenzkanal der zumindest einen Bake aufweist.

Bei Ausführungsbeispielen kann das erste Funknetz ein asynchrones Funknetz sein.

Bei Ausführungsbeispielen kann das zweite Funknetz ein synchrones Funknetz sein.

Bei Ausführungsbeispielen kann die Basisstation konfiguriert sein, um unter Verwendung des zweiten Funknetzes zumindest eine Bake zur Synchronisation von Teilnehmern des zweiten Funknetzes [z.B. Teilnehmer des Kommunikationssystems, die das zweite Funknetz nutzen [z.B. Daten unter Verwendung des zweiten Funknetzes übertragen]] auszusenden.

Beispielsweise kann die Basisstation konfiguriert sein, um unter Verwendung des zweiten Funknetzes eine Mehrzahl von Baken in gewissen Intervallen auszusenden.

Zum Beispiel kann die Basisstation konfiguriert sein, um die Baken regelmäßig oder basierend auf einem [z.B. im zweiten Funknetz bekannten] Bakenübertragungsmuster auszusenden, welches den Teilnehmern zum Beispiel in Form einer Signalisierungsinformation mit einer Downlink-Datenübertragung mitgeteilt werden kann.

Ferner oder alternativ kann in jeder Bake eine Information über eine Übertragung einer nachfolgenden Bake oder mehrerer nachfolgenden Baken enthalten sein, wie z.B. ein Zeitpunkt (oder Zeitpunkte), ein Frequenzkanal (oder Frequenzkanäle), und/oder ein Sprungmuster (oder Sprungmuster) der Übertragung der nachfolgenden Bake (oder der mehreren nachfolgenden Baken). Auch ist es möglich, dass die für den Empfang einer nachfolgenden Bake oder mehrerer nachfolgenden Baken erforderliche Information von einer mit der Bake übertragenen Information abgeleitet werden kann, wie z.B. einem Zustand eines Zufallszahlengenerators, wie z.B. einem PRBS Generator (PRBS = Pseudorandom Binary Sequence, dt. pseudozufällige binäre Sequenz), basierend auf dem die Übertragungen der Baken pseudozufällig in der Zeit und/oder Frequenz verteilt werden. In diesen Fällen kann den Teilnehmern des Kommunikationssystems beispielsweise mittels der Signalisierungsinformation der Downlink-Datenübertragung die Übertragung der nächsten Bake signalisiert werden.

Bei Ausführungsbeispielen kann die Basisstation konfiguriert sein, um die zumindest eine Bake nur bei Bedarf [z.B. wenn im ersten Funknetz nicht ausreichend Ressourcen für das Kommunikationssystem zur Verfügung stehen ] auszusenden.

Bei Ausführungsbeispielen kann die Basisstation konfiguriert sein, um eine asynchrone Uplink-Datenübertragung von einem Teilnehmer des Kommunikationssystems unter Verwendung des ersten Funknetzes zu empfangen und um zeitlich synchronisiert zu der empfangenen Uplink-Datenübertragung eine Downlink-Datenübertragung zu dem Teilnehmer unter Verwendung des ersten Funknetztes zu senden, wobei die Downlink-Datenübertragung eine Signalisierungsinformation über eine Übertragung zumindest einer Bake aufweist, wobei die Basisstation konfiguriert sein kann, um die zumindest eine Bake unter Verwendung des zweiten Funknetzes [z.B. entsprechend der Signalisierungsinformation] zu senden.

Bei Ausführungsbeispielen kann die Signalisierungsinformation eine Information über einen Zeitpunkt der zumindest einen Bake aufweisen.

Bei Ausführungsbeispielen kann die Signalisierungsinformation eine Information über einen Frequenzkanal der zumindest einen Bake aufweisen.

Bei Ausführungsbeispielen kann die Signalisierungsinformation eine Information über zumindest einen Baken-Übertragungsparameter [z.B. Systemparameter] aufweisen, wobei der zumindest eine Baken-Übertragungsparameter zumindest einer aus
- einem Zeit-/Frequenzsprungmuster der zumindest einen Bake,
- einer Berechnungsvorschrift für die Zeitpunkte und/oder Frequenzkanäle und/oder Zeit-/Frequenzsprungmuster der Übertragung der zumindest einen Bake,
- einem zeitlichen Abstand zwischen aufeinanderfolgenden Übertragungen der Bake,
- einer Berechnungsvorschrift für die zeitlichen Abstände zwischen aufeinanderfolgenden Übertragungen der Bake,
- einem kryptographischen Schlüssel für die Übertragung der Bake, und
- einer Berechnungsvorschrift zur Erzeugung eines kryptographischen Schlüssels für die Übertragung der zumindest einen Bake,
   ist.

Bei Ausführungsbeispielen kann die Basisstation konfiguriert sein, um eine Mehrzahl von Baken unter Verwendung des zweiten Funknetzes [z.B. zur Synchronisation der Teilnehmer des Kommunikationssystems] in gewissen Intervallen auszusenden, wobei die Signalisierungsinformation eine Information über die Übertragung zumindest einer nächsten Bake der Mehrzahl von Baken aufweist.

Bei Ausführungsbeispielen kann die Basisstation konfiguriert sein, um eine weitere Uplink-Datenübertragung von dem Teilnehmer des Kommunikationssystems unter Verwendung des ersten Funknetzes zu empfangen und um zeitlich synchronisiert zu der empfangenen weiteren Uplink-Datenübertragung eine weitere Downlink-Datenübertragung zu dem Teilnehmer unter Verwendung des ersten Funknetztes zu senden, wobei die weitere Downlink-Datenübertragung eine Signalisierungsinformation über die Übertragung der nächsten Bake aufweist,

Bei Ausführungsbeispielen kann die Basisstation konfiguriert sein, um einen individuellen kryptographischen Schlüssel für die Kommunikation mit einem Teilnehmer mittels des ersten Funknetzes [z.B. mit dem Teilnehmer] auszuhandeln, oder wobei die Basisstation einen vorab bekannten individuellen kryptographischen Schlüssel für die Kommunikation mit einem Teilnehmer mittels des ersten Funknetzes besitzt, wobei die Basisstation konfiguriert sein kann, um einen kryptographischen Schlüssel für die Verwendung des zweiten Funknetzes über eine verschlüsselte Übertragung unter Verwendung des ersten Funknetzes an einen Teilnehmer zu senden.

Bei Ausführungsbeispielen kann die Basisstation konfiguriert sein, um zumindest einen kryptographischen Schlüssel, der zur Verschlüsselung von Daten, die unter Verwendung des zweiten Funknetzes übertragen werden, unter Verwendung einer kryptographisch verschlüsselten Übertragung in dem ersten Funknetz zu erneuern und/oder abzuändern.

Bei Ausführungsbeispielen kann die Basisstation konfiguriert sein, um eine Kompromittierung oder potentielle Kompromittierung eines kryptographischen Schlüssels zur Verschlüsselung von Daten, die unter Verwendung des zweiten Funknetzes übertragen werden, zu erkennen [z.B. durch Erkennung gezielter Störungen oder fehlerhafter Daten oder durch Seitenkanalinformationen über eine Änderung der Vertrauenswürdigkeit eines Teilnehmers, der im Besitz des Schlüssels ist] und ansprechend auf die Erkennung einen neuen kryptographischen Schlüssel auszubringen [z.B. an die Teilnehmer des Kommunikationssystems zu verteilen].

Bei Ausführungsbeispielen kann die Basisstation konfiguriert sein, um gleichzeitig Daten unter Verwendung des ersten Funknetzes und des zweiten Funknetzes zu übertragen [z.B. zu senden und/oder zu empfangen].

Beispielsweise kann die Basisstation gleichzeitig Daten [z.B. ein erstes Datenpaket] an einen Teilnehmer oder mehrere Teilnehmer des Kommunikationssystems unter Verwendung des ersten Funknetzes übertragen und gleichzeitig Daten [z.B. ein zweites Datenpaket] an einen anderen Teilnehmer oder mehrere andere Teilnehmer des Kommunikationssystems unter Verwendung des zweiten Funknetzes übertragen.

Bei Ausführungsbeispielen kann die Basisstation konfiguriert sein, um eine Signalisierungsinformation, die ein zu verwendendes Funknetz aus dem ersten Funknetz und dem zweiten Funknetz signalisiert, zu zumindest einen Teilnehmer des Kommunikationssystems zu übertragen.

Beispielsweise kann die Basisstation eine Downlink-Datenübertragung [z.B. unter Verwendung eines derzeitig verwendeten Funknetzes aus dem ersten Funknetz und dem zweiten Funknetz] mit der Signalisierungsinformation zu dem zumindest einen Teilnehmer übertragen.

Bei Ausführungsbeispielen kann die Basisstation konfiguriert sein, um zur Übertragung von zu übertragenden Daten [z.B. eines Datenpakets] aus dem ersten Funknetz und dem zweiten Funknetz in Abhängigkeit von Übertragungsanforderungen [z.B. Latenz, Übertragungssicherheit, QoS] der zu übertragenen Daten und/oder in Abhängigkeit von Betriebsparametern [z.B. zur Verfügung stehende Energie] eines Teilnehmers des Kommunikationssystems, der die Daten empfangen soll, eines der Funknetze auszuwählen.

Bei Ausführungsbeispielen kann die Basisstation konfiguriert sein, um eine Signalisierungsinformation, die eine Verfügbarkeit des ersten und/oder zweiten Funknetzes [z.B. zeitliche Einschränkungen] signalisiert, unter Verwendung des ersten und/oder zweiten Funknetzes [z.B. unter Verwendung des jeweils anderen Funknetzes] an zumindest einen Teilnehmer des Kommunikationssystems zu übertragen.

Bei Ausführungsbeispielen kann die Basisstation konfiguriert sein, um eine zur Kommunikation in dem zweiten Funknetz erforderliche Informationen [z.B. Systemparameter des zweiten Funknetzes, wie z.B. der zweite Frequenzbereich, das zweite Zeit- und/oder Frequenzsprungmuster, usw.] unter Verwendung des ersten Funknetzes [z.B. bei Anmeldung in dem ersten Funknetz] zu zumindest einem Teilnehmer des Kommunikationssystems zu übertragen [z.B. bei Anmeldung des jeweiligen Teilnehmers in dem ersten Funknetz].

Bei Ausführungsbeispielen kann die Basisstation konfiguriert sein, um eine zur Kommunikation in dem ersten Funknetz erforderliche Informationen [z.B. Systemparameter des ersten Funknetzes, wie z.B. der erste Frequenzbereich, das erste Zeit- und/oder Frequenzsprungmuster, usw.] unter Verwendung des zweiten Funknetzes zu zumindest einem Teilnehmer des Kommunikationssystems zu übertragen [z.B. bei Anmeldung des jeweiligen Teilnehmers in dem zweiten Funknetz].

Bei Ausführungsbeispielen kann die Basisstation konfiguriert sein, um einen Betrieb des ersten Funknetzes oder des zweiten Funknetzes zeitweise einzustellen [z.B. nur noch Übertragungen unter Verwendung des ersten Funknetzes oder des zweiten Funknetzes zu senden und zu empfangen].

Bei Ausführungsbeispielen kann die Basisstation konfiguriert sein, um den Betrieb des ersten Funknetzes und/oder des zweiten Funknetzes in Abhängigkeit von zumindest einem aus
- einem aktuellen oder erwarteten Übertragungsaufkommen,
- aktuellen oder erwarteten Anforderungen von Übertragungen an eine Latenz,
- aktuellen oder erwarteten Anforderungen von Übertragungen an eine Rückantwortmöglichkeit,
- aktuellen oder erwarteten Anforderungen von Übertragungen an eine Übertragungssicherheit,
- aktuellen oder erwarteten Anforderungen von Übertragungen an einen adressierbaren Empfängerkreis [z.B. einer Punk-zu-Mehrpunkt-Übertragung],
- einer Anzahl an angemeldeten Teilnehmer,
- Arten und/oder Typen [z.B. Fähigkeit Übertragungen in dem ersten oder zweiten Funknetz zu senden oder zu empfangen] der angemeldeten Teilnehmer,
- einer Kanalauslastung [z.B. vorhandene Fremdsysteme] innerhalb des verwendeten Frequenzbereichs, und
- vorhandenen Störungen innerhalb des verwendeten Frequenzbereichs, zeitweise einzustellen.

Bei Ausführungsbeispielen kann die Basisstation konfiguriert sein, um eine dynamische Ressourcenzuteilung zu dem ersten und/oder zweiten Funknetz vorzunehmen, wobei Ressourcen mindestens eines aus
- Frequenzkanälen,
- Zeitschlitze,
- Zeit-/Frequenzsprungmustern, und
- Sendeleistung,
sind.

Bei Ausführungsbeispielen können das erste Funknetz und das zweite Funknetz auf unterschiedlichen Funkstandards basieren.

Bei Ausführungsbeispielen das erste Funknetz auf dem in ETSI TS 103 357 spezifizierten Funknetz basieren.

Bei Ausführungsbeispielen kann das zweite Funknetz auf dem in IEEE 802.15.4w spezifizierten Funknetz basieren.

Bei Ausführungsbeispielen können die Daten ein Datenpaket umfassen, wobei die Basisstation konfiguriert ist, um das Datenpaket [z.B. der physikalischen Schicht im OSI Modell] aufgeteilt auf eine Mehrzahl von Sub-Datenpaketen zu übertragen [z.B. zu senden und/oder zu empfangen], wobei die Mehrzahl von Sub-Datenpaketen jeweils kürzer sind als das Datenpaket, wobei der Teilnehmer konfiguriert ist, um die Mehrzahl von Sub-Datenpaketen entsprechend des jeweiligen Zeit- und/oder Frequenzsprungmusters zu übertragen [z.B. wobei die Mehrzahl von Sub-Datenpaketen nicht zusammenhängend übertragen werden, z.B. sondern mit übertragungsfreien Intervallen zwischen den Sub-Datenpaketen].

Bei Ausführungsbeispielen kann ein Zugriff auf das Frequenzband durch das erste Funknetz basierend auf einem ersten Kanalzugriffsmuster erfolgt, das eine erste verwendbare frequenz- und/oder zeitsprungbasierte Belegung des Frequenzbands angibt, wobei ein Zugriff auf das Frequenzband durch das zweite Funknetz basierend auf einem zweiten Kanalzugriffsmuster erfolgt, das eine zweite verwendbare frequenz- und/oder zeitsprungbasierte Belegung des Frequenzbands angibt, wobei das erste Kanalzugriffsmuster und das zweite Kanalzugriffsmuster unterschiedlich sind [z.B. wobei sich die eine erste verwendbare frequenz- und/oder zeitsprungbasierte Belegung des Frequenzbands von der zweiten verwendbaren frequenz- und/oder zeitsprungbasierte Belegung des Frequenzbands unterscheidet], wobei die Basisstation konfiguriert sein kann, um in dem ersten Funknetz die Daten entsprechend des ersten Zeit- und/oder Frequenzsprungmusters zu übertragen, wobei das erste Zeit- und/oder Frequenzsprungmuster eine [z.B. echte] Teilmenge der durch das erste Kanalzugriffsmuster angegebenen verwendbaren frequenz- und/oder zeitsprungbasierte Belegung des Frequenzbands angibt, wobei die Basisstation konfiguriert sein kann, um in dem zweiten Funknetz die Daten entsprechend des zweiten Zeit- und/oder Frequenzsprungmusters zu übertragen, wobei das zweite Zeit- und/oder Frequenzsprungmuster eine [z.B. echte] Teilmenge der durch das zweite Kanalzugriffsmuster angegebenen verwendbaren frequenz- und/oder zeitsprungbasierte Belegung des Frequenzbands angibt.

Weitere Ausführungsbeispiele schaffen ein Kommunikationssystem mit zumindest einer Basisstation und einem oder mehreren Teilnehmern, wobei das Kommunikationssystem konfiguriert ist, um Daten unter Verwendung eines ersten Funknetzes und eines zweiten Funknetzes zwischen den Teilnehmern und/oder der Basisstation in einem Frequenzband [z.B. welches von einer Mehrzahl von Kommunikationssystemen genutzt wird; z.B. dem ISM Band] zu übertragen, wobei in dem ersten Funknetz Daten entsprechend eines ersten Zeit- und/oder Frequenzsprungmusters in einem ersten Frequenzbereich des Frequenzbands übertragen werden, wobei in dem zweiten Funknetz Daten entsprechend eines zweiten Zeit- und/oder Frequenzsprungmusters in einem zweiten Frequenzbereich des Frequenzbands übertragen werden, wobei das erste Zeit- und/oder Frequenzsprungmuster und das zweite Zeit- und/oder Frequenzsprungmuster unterschiedlich sind, wobei sich der erste Frequenzbereich und der zweite Frequenzbereich zumindest teilweise überlappen, wobei das erste Funknetz ein asynchrones Funknetz ist in dem Teilnehmer des Kommunikationssystems Daten zu beliebigen Zeitpunkten an die Basisstation senden können, wobei das zweite Funknetz ein synchrones Funknetz ist, in dem die Basisstation den Teilnehmern des Kommunikationssystems exklusive Ressourcen zur Übertragung der Daten zuweist, wobei in dem Kommunikationssystems eine asynchrone Uplink-Datenübertragung von einem Teilnehmer des Kommunikationssystems zu der Basisstation unter Verwendung des ersten Funknetzes übertragen wird und zeitlich synchronisiert zu der empfangenen Uplink-Datenübertragung eine Downlink-Datenübertragung von der Basisstation zu dem Teilnehmer unter Verwendung des ersten Funknetzes übertragen wird, wobei die Downlink-Datenübertragung eine Signalisierungsinformation über eine Übertragung zumindest einer Bake aufweist, wobei in dem Kommunikationssystem zumindest eine Bake zur Synchronisation von Teilnehmern des zweiten Funknetzes unter Verwendung des zweiten Funknetzes übertragen wird, wobei die Signalisierungsinformation eine Information über einen Zeitpunkt und/oder über einen Frequenzkanal der zumindest einen Bake aufweist.

Bei Ausführungsbeispielen kann das erste Funknetz ein asynchrones Funknetz sein.

Bei Ausführungsbeispielen kann das zweite Funknetz ein synchrones Funknetz sein.

Bei Ausführungsbeispielen können das erste Zeit- und/oder Frequenzsprungmuster des ersten Funknetzes und das zweite Zeit- und/oder Frequenzsprungmuster des zweiten Funknetzes so gewählt sein, dass ein Totalausfall einer Datenübertragung durch gegenseitige Störung vermieden wird.

Bei Ausführungsbeispielen können in dem ersten Funknetz Daten entsprechend eines ersten Kanalzugriffsmusters übertragen werden, wobei das erste Kanalzugriffsmuster eine verwendbare frequenz- und/oder zeitsprungbasierte Belegung des ersten Frequenzbereichs angibt, wobei das erste Zeit- und/oder Frequenzsprungmuster eine Teilmenge der durch das erste Kanalzugriffsmuster angegebenen verwendbaren frequenz- und/oder zeitsprungbasierte Belegung des ersten Frequenzbereichs angibt, wobei in dem zweiten Funknetz Daten entsprechend eines zweiten Kanalzugriffsmusters übertragen werden können, wobei das zweite Kanalzugriffsmuster eine verwendbare frequenz- und/oder zeitsprungbasierte Belegung des zweiten Frequenzbereichs angibt, wobei das erste Zeit- und/oder Frequenzsprungmuster eine Teilmenge der durch das erste Kanalzugriffsmuster angegebenen verwendbaren frequenz- und/oder zeitsprungbasierte Belegung des ersten Frequenzbereichs angibt, wobei das erste Kanalzugriffsmuster und das zweite Kanalzugriffsmuster unterschiedlich sind.

Bei Ausführungsbeispielen können das erste Funknetz und das zweite Funknetz auf unterschiedlichen Funkstandards basieren.

Bei Ausführungsbeispielen kann das erste Funknetz auf dem in ETSI TS 103 357 spezifizierten Funknetz basieren.

Bei Ausführungsbeispielen kann das zweite Funknetz auf dem in IEEE 802.15.4w spezifizierten Funknetz basieren.

Weitere Ausführungsbeispiele schaffen eine Kommunikationsanordnung mit einem ersten Kommunikationssystem und einem zweiten Kommunikationssystem, wobei das erste Kommunikationssystem und das zweite Kommunikationssystem konfiguriert sind, um in dem gleichen Frequenzband drahtlos zu kommunizieren, wobei das erste Kommunikationssystem konfiguriert ist, um Daten unter Verwendung eines ersten Funknetzes in dem Frequenzband [z.B. in einem ersten Frequenzbereich des Frequenzbands] zu übertragen, wobei das zweite Kommunikationssystem konfiguriert ist, um Daten unter Verwendung eines zweiten Funknetzes in dem Frequenzband [z.B. in einem zweiten Frequenzbereich des Frequenzbands, das den ersten Frequenzbereich zumindest teilweise überlappt] zu übertragen, wobei in dem ersten Funknetz ein Zugriff auf das Frequenzband basierend auf einem ersten Zeit- und/oder Frequenzsprungmuster [z.B. Kanalzugriffsmuster] erfolgt, wobei in dem zweiten Funknetz ein Zugriff auf das Frequenzband basierend auf einem zweiten Zeit- und/oder Frequenzsprungmuster [z.B. Kanalzugriffsmuster] erfolgt, wobei das erste Funknetz und das zweite Funknetz unterschiedlich sind, wobei das erste Zeit- und/oder Frequenzsprungmuster und das zweite Zeit- und/oder Frequenzsprungmuster unterschiedlich sind, wobei das erste Zeit- und/oder Frequenzsprungmuster und das zweite Zeit- und/oder Frequenzsprungmuster so gewählt sind, dass ein Totalausfall einer Datenübertragung durch gegenseitige Störung vermieden wird.

Bei Ausführungsbeispielen können das erste Zeit- und/oder Frequenzsprungmuster und das zweite Zeit- und/oder Frequenzsprungmuster einen so hohen Orthogonalitätsgrad aufweisen, dass ohne Fremdstörungen eine garantierte QoS erreicht wird.

Bei Ausführungsbeispielen kann das erste Funknetz ein asynchrones Funknetz sein.

Bei Ausführungsbeispielen kann das zweite Funknetz ein synchrones Funknetz sein.

Bei Ausführungsbeispielen können das erste Funknetz und das zweite Funknetz auf unterschiedlichen Funkstandards basieren.

Bei Ausführungsbeispielen kann das erste Funknetz auf dem in ETSI TS 103 357 spezifizierten Funknetz basieren.

Bei Ausführungsbeispielen kann das zweite Funknetz auf dem in IEEE 802.15.4w spezifizierten Funknetz basieren.

Weitere Ausführungsbeispiele schaffen ein Verfahren zum Betrieb eines Teilnehmers eines Kommunikationssystems. Das Verfahren umfasst einen Schritt des Übertragens von Daten in Abhängigkeit von einem Betriebsmodus des Teilnehmers unter Verwendung eines ersten Funknetzes oder eines zweiten Funknetzes in einem [z.B. im selben] Frequenzband [z.B. welches von einer Mehrzahl von Kommunikationssystemen genutzt wird; z.B. dem ISM Band], wobei in dem ersten Funknetz Daten entsprechend eines ersten Zeit- und/oder Frequenzsprungmusters in einem ersten Frequenzbereich des Frequenzbands übertragen werden, wobei in dem zweiten Funknetz Daten entsprechend eines zweiten Zeit- und/oder Frequenzsprungmusters in einem zweiten Frequenzbereich des Frequenzbands übertragen werden, wobei das erste Zeit- und/oder Frequenzsprungmuster und das zweite Zeit- und/oder Frequenzsprungmuster unterschiedlich sind, wobei sich der erste Frequenzbereich und der zweite Frequenzbereich zumindest teilweise überlappen, wobei das erste Funknetz ein asynchrones Funknetz ist, in dem Teilnehmer des Kommunikationssystems Daten zu beliebigen Zeitpunkten an die Basisstation senden können, wobei das zweite Funknetz ein synchrones Funknetz ist, in dem den Teilnehmern exklusive Ressourcen zur Übertragung der Daten zugewiesen sind. Das Verfahren umfasst ferner einen Schritt des Sendens einer asynchrone Uplink-Datenübertragung unter Verwendung des ersten Funknetzes zu einer Basisstation des Kommunikationssystems. Das Verfahren umfasst ferner einen Schritt des Empfangens, zeitlich synchronisiert zu der gesendeten Uplink-Datenübertragung, einer Downlink-Datenübertragung unter Verwendung des ersten Funknetzes von der Basisstation (104), wobei die Downlink-Datenübertragung eine Signalisierungsinformation aufweist. Das Verfahren umfasst ferner einen Schritt des Empfangens, basierend auf der Signalisierungsinformation, zumindest einer Bake, die von der Basisstation (104) unter Verwendung des zweiten Funknetzes gesendet wird, um in das zweite Funknetz zu wechseln, wobei die Signalisierungsinformation eine Information über einen Zeitpunkt und/oder über einen Frequenzkanal der zumindest einen Bake aufweist.

Weitere Ausführungsbeispiele schaffen ein Verfahren zum Betrieb einer Basisstation eines Kommunikationssystems. Das Verfahren umfasst einen Schritt des Übertragens von Daten unter Verwendung eines ersten Funknetzes und eines zweiten Funknetzes in einem [z.B. im selben] Frequenzband [z.B. welches von einer Mehrzahl von Kommunikationssystemen genutzt wird; z.B. dem ISM Band], wobei in dem ersten Funknetz Daten entsprechend eines ersten Zeit- und/oder Frequenzsprungmusters in einem ersten Frequenzbereich des Frequenzbands übertragen werden, wobei in dem zweiten Funknetz Daten entsprechend eines zweiten Zeit- und/oder Frequenzsprungmusters in einem zweiten Frequenzbereich des Frequenzbands übertragen werden, wobei das erste Zeit- und/oder Frequenzsprungmuster und das zweite Zeit- und/oder Frequenzsprungmuster unterschiedlich sind, wobei sich der erste Frequenzbereich und der zweite Frequenzbereich zumindest teilweise überlappen, wobei das erste Funknetz ein asynchrones Funknetz ist, in dem Teilnehmer des Kommunikationssystems Daten zu beliebigen Zeitpunkten an die Basisstation senden können, wobei das zweite Funknetz ein synchrones Funknetz ist, in dem den Teilnehmern exklusive Ressourcen zur Übertragung der Daten zugewiesen sind. Das Verfahren umfasst ferner einen Schritt des Empfangens einer asynchrone Uplink-Datenübertragung von einem Teilnehmer (106_1) des Kommunikationssystems (100) unter Verwendung des ersten Funknetzes. Das Verfahren umfasst ferner einen Schritt des Sendens, zeitlich synchronisiert zu der empfangenen Uplink-Datenübertragung, einer Downlink-Datenübertragung zu dem Teilnehmer (106_1) unter Verwendung des ersten Funknetztes, wobei die Downlink-Datenübertragung eine Signalisierungsinformation über eine Übertragung zumindest einer Bake aufweist. Das Verfahren umfasst ferner einen Schritt des Sendens der zumindest einen Bake zur Synchronisation von Teilnehmern des zweiten Funknetzes unter Verwendung des zweiten Funknetzes, wobei die Signalisierungsinformation eine Information über einen Zeitpunkt und/oder über einen Frequenzkanal der zumindest einen Bake aufweist.

Weitere Ausführungsbeispiele schaffen ein Verfahren zum Betrieb eines Kommunikationssystems. Das Verfahren umfasst einen Schritt des Übertragens von Daten unter Verwendung eines ersten Funknetzes und eines zweiten Funknetzes zwischen Teilnehmern und/oder einer Basisstation des Kommunikationssystems in einem Frequenzband [z.B. welches von einer Mehrzahl von Kommunikationssystemen genutzt wird; z.B. dem ISM Band], wobei in dem ersten Funknetz Daten entsprechend eines ersten Zeit- und/oder Frequenzsprungmusters in einem ersten Frequenzbereich des Frequenzbands übertragen werden, wobei in dem zweiten Funknetz Daten entsprechend eines zweiten Zeit- und/oder Frequenzsprungmusters in einem zweiten Frequenzbereich des Frequenzbands übertragen werden, wobei das erste Zeit- und/oder Frequenzsprungmuster und das zweite Zeit- und/oder Frequenzsprungmuster unterschiedlich sind, wobei sich der erste Frequenzbereich und der zweite Frequenzbereich zumindest teilweise überlappen, wobei das erste Funknetz ein asynchrones Funknetz ist in dem Teilnehmer des Kommunikationssystems Daten zu beliebigen Zeitpunkten an die Basisstation senden können, wobei das zweite Funknetz ein synchrones Funknetz ist, in dem die Basisstation den Teilnehmern des Kommunikationssystems exklusive Ressourcen zur Übertragung der Daten zuweist, wobei in dem Kommunikationssystems eine asynchrone Uplink-Datenübertragung von einem Teilnehmer des Kommunikationssystems zu der Basisstation unter Verwendung des ersten Funknetzes übertragen wird und zeitlich synchronisiert zu der empfangenen Uplink-Datenübertragung eine Downlink-Datenübertragung von der Basisstation zu dem Teilnehmer unter Verwendung des ersten Funknetzes übertragen wird, wobei die Downlink-Datenübertragung eine Signalisierungsinformation über eine Übertragung zumindest einer Bake aufweist, wobei in dem Kommunikationssystem zumindest eine Bake zur Synchronisation von Teilnehmern des zweiten Funknetzes unter Verwendung des zweiten Funknetzes übertragen wird, wobei die Signalisierungsinformation eine Information über einen Zeitpunkt und/oder über einen Frequenzkanal der zumindest einen Bake aufweist.

Ausführungsbeispiele der vorliegenden Erfindung kombinieren die Vorteile eines asynchronen Systems und eines synchronen Systems bzw. vermeiden die Nachteile des asynchronen Systems und des synchronen Systems.

Gerade bei speziellen Ereignissen wie z.B. sog. Events (dt. Ereignissen), kann es vorkommen, dass viele Teilnehmer im Downlink versorgt werden müssen, was mit einem reinen asynchronen System nicht möglich wäre. Typische Anwendungen im loT-Umfeld dafür sind z.B. ein Firmware Update, eine Warnung für Feuerwehrleute, oder ein An- / Ausschalten aller Lampen.

Ausführungsbeispiele der vorliegenden Erfindung werden bezugnehmend auf die beiliegenden Figuren näher beschrieben. Es zeigen:
- Fig. 1: eine schematische Ansicht eines Kommunikationssystems sowie zweier anderer Kommunikationssysteme, gemäß einem Ausführungsbeispiel der vorliegenden Erfindung,
- Fig. 2: in einem Diagramm eine Belegung des Frequenzbands bei der Übertragung von Daten in einem ersten Funknetz entsprechend eines ersten Zeit- und/oder Frequenzsprungmusters und der Übertragung von Daten in einem zweiten Funknetz entsprechend eines zweiten Zeit- und/oder Frequenzsprungmusters, gemäß einem Ausführungsbeispiel der vorliegenden Erfindung,
- Fig. 3: ein schematisches Blockschaltbild der Basisstation und eines der Teilnehmer des in Fig. 1 gezeigten Kommunikationssystems, gemäß einem Ausführungsbeispiel der vorliegenden Erfindung,
- Fig. 4: in einem Diagramm eine Belegung des Kommunikationskanals bei der Übertragung von Sub-Datenpaketen in einem ersten Kommunikationssystem entsprechend eines ersten Zeit- und/oder Frequenzsprungmusters und der Übertragung von Sub-Datenpaketen in einem zweiten Kommunikationssystem entsprechend eines zweiten Zeit- und/oder Frequenzsprungmusters, gemäß einem Ausführungsbeispiel der vorliegenden Erfindung,
- Fig. 5: in einem Diagramm ein Beispiel einer Systemüberlagerung im gleichen Band, wobei die benutzte Bandbreite vom zweiten System (Funknetz) komplett in der Bandbreite vom ersten System (Funknetz) enthalten ist,
- Fig. 6: in einem Diagramm ein Beispiel einer Systemüberlagerung im gleichen Band, wobei beide Systeme (Funknetze) nur noch einen Teilbereich des zur Verfügung stehenden Frequenzbandes gemeinsam nutzen,
- Fig. 7: ein Ablaufdiagramm einer Anmeldung eines Teilnehmers 106_1 in einem synchronen Funknetz,
- Fig. 8: ein Ablaufdiagramms eines Wechsels eines Teilnehmers von einem asynchronen Funknetz in ein synchrones Funknetz, gemäß einem Ausführungsbeispiel der vorliegenden Erfindung,
- Fig. 9: ein Flussdiagramm eines Verfahrens zum Betrieb eines Teilnehmers eines Kommunikationssystems, gemäß einem Ausführungsbeispiel der vorliegenden Erfindung,
- Fig. 10: ein Flussdiagramm eines Verfahrens zum Betrieb einer Basisstation eines Kommunikationssystems, gemäß einem Ausführungsbeispiel der vorliegenden Erfindung,
- Fig. 11: ein Flussdiagram eines Verfahrens zum Betrieb eines Kommunikationssystems, gemäß einem Ausführungsbeispiel der vorliegenden Erfindung, und
- Fig. 12: ein Flussdiagramm eines Verfahrens zum Betreiben von zwei Kommunikationssystemen in einem Frequenzband, gemäß einem Ausführungsbeispiel der vorliegenden Erfindung.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

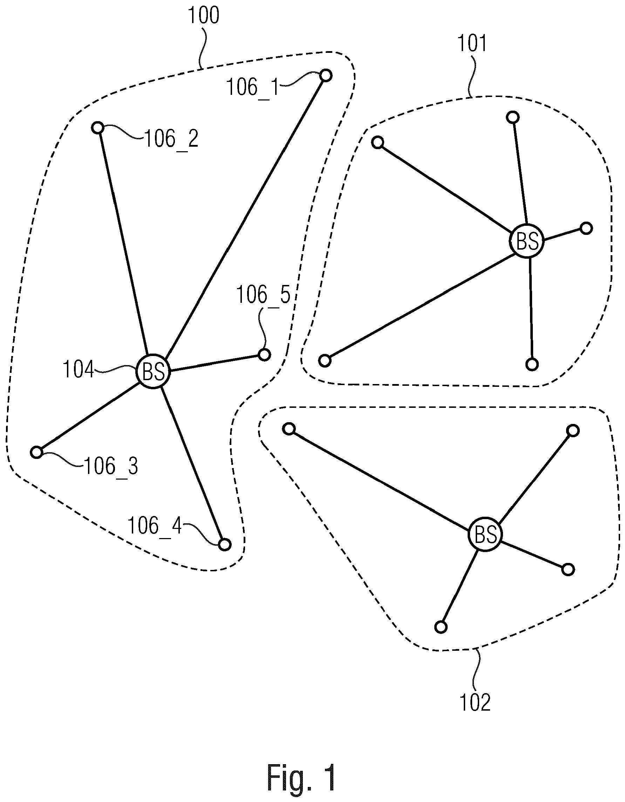

Fig. 1 zeigt eine schematische Ansicht eines Kommunikationssystems 100 sowie zweier anderer Kommunikationssysteme 101 und 102, gemäß einem Ausführungsbeispiel der vorliegenden Erfindung.

Das Kommunikationssystem 100 kann eine Basisstation 104 (oder optional mehrere Basisstationen) und ein oder mehrere Teilnehmer (z.B. Endpunkte) 106_1-106_n aufweisen, wobei n eine natürliche Zahl größer gleich eins ist. In dem in Fig. 1 gezeigten Ausführungsbeispiel weist das Kommunikationssystem 100 zur Veranschaulichung fünf Teilnehmer 106_1-106_5 auf, das Kommunikationssystem 104_1 kann jedoch genauso 1, 10, 100, 1.000, 10.000 oder sogar 100.000 Teilnehmer aufweisen.

Das Kommunikationssystem 100 kann ausgebildet sein, um in einem Frequenzband (z.B. einem lizenzfreien und/oder genehmigungsfreien Frequenzband, wie z.B. dem ISM Band) drahtlos zu kommunizieren, welches von einer Mehrzahl von untereinander unkoordinierten Kommunikationssystemen zur Kommunikation genutzt wird, wie dies in Fig. 1 beispielhaft durch die anderen Kommunikationssysteme 101 und 102 angedeutet ist.

Das von dem Kommunikationssystem 100 genutzte Frequenzband kann dabei eine wesentlich (z.B. um zumindest den Faktor 5 (oder 10)) größere Bandbreite aufweisen als typischerweise in den Teilnehmern 106_1-106_n Empfangsfilter der Empfänger (Receiver oder Transceiver).

Das in Fig. 1 gezeigte Kommunikationssystem kann beispielweise ein loT-System sein, wobei die Teilnehmer 106_1-106_n des Kommunikationssystems 100 beispielsweise Aktorknoten und/oder Sensorknoten, wie z.B. Heizungszähler, Bewegungsmelder, Rauchmelder, usw., sein können.

Bei Ausführungsbeispielen können innerhalb des Kommunikationssystems 100 zur Übertragung von Daten zwei unterschiedliche Funknetze verwendet werden, die auf dasselbe Frequenzband (z.B. ein lizenzfreies und/oder genehmigungsfreies Frequenzband, wie z.B. das ISM Band) zugreifen.

Ein Funknetz kann sich dabei hierin auf die zwischen den Teilnehmern 106_1-106_n und der Basisstation 104 vereinbarten Kommunikationsabläufe (z.B. Frequenzen, Zeiten, Ressourcen, Modulation, Datenraten, usw.) beziehen, wie sie beispielsweise in Funkstandards (z.B. ETSI, IEEE, 3GPPP) spezifiziert sind.

Bei Ausführungsbeispielen kann das erste Funknetz somit auf einem ersten Funkstandard basieren, z.B. entsprechend eines ersten Funkstandards kommunizieren, und das zweite Funknetz auf einem zweiten Funkstandard basieren, z.B. entsprechend eines zweiten Funkstandards kommunizieren, wobei der erste Funkstandard und der zweite Funkstandard unterschiedlich sein können. Beispielsweise kann der erste Funkstandard auf einer asynchronen Übertragung und der zweite Funkstandard auf einer synchronen Übertragung basieren.

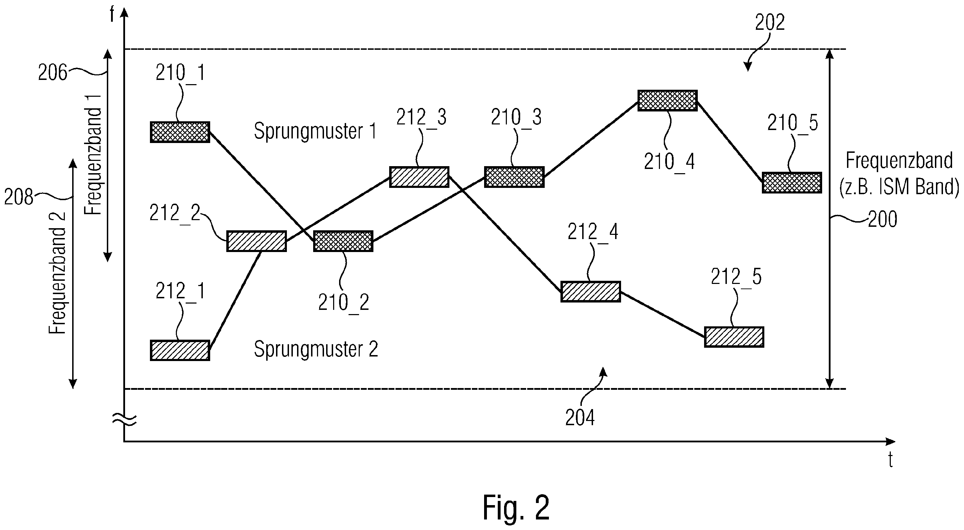

Um eine Übertragung von Daten, die unter Verwendung eines ersten Funknetzes der zwei Funknetzte erfolgt, und eine Übertragung von Daten, die unter Verwendung eines zweiten Funknetzes der zwei Funknetze erfolgt, voneinander zu trennen, können gemäß Ausführungsbeispielen die beiden Funknetzte unterschiedliche Zeit- und/oder Frequenzsprungmuster (oder Kanalzugriffsmuster) nutzen, wie dies Beispielhaft in Fig. 2 gezeigt ist.

Fig. 2 zeigt dabei in einem Diagramm eine Belegung des Frequenzbands 200 bei der Übertragung von Daten in einem ersten Funknetz entsprechend eines ersten Zeit- und/oder Frequenzsprungmusters 202 und der Übertragung von Daten in einem zweiten Funknetz entsprechend eines zweiten Zeit- und/oder Frequenzsprungmusters 204, gemäß einem Ausführungsbeispiel der vorliegenden Erfindung. Dabei beschreibt die Ordinate die Frequenz und die Abszisse die Zeit.

Wie in Fig. 2 zu erkennen ist, können das erste Zeit- und/oder Frequenzsprungmuster 202 und das zweite Zeit- und/oder Frequenzsprungmuster 204 unterschiedlich sein, z.B. so dass sich (Sub-)Datenpakete 210_1-210_5, die unter Verwendung des ersten Funknetzes entsprechend dem ersten Zeit- und/oder Frequenzsprungmuster 202 übertragen werden, und (Sub-)Datenpakete 212_1-212_5, die unter Verwendung des zweiten Funknetzes entsprechend dem zweiten Zeit- und/oder Frequenzsprungmuster 202 übertragen werden, nicht überlappen (siehe Fig. 2) oder höchstens so stark überlappen, dass empfängerseitig eine fehlerfreie Decodierung der mit den jeweiligen (Sub-)Datenpaketen zu übertragenen Daten möglich ist.

Eine durch das erste Zeit- und/oder Frequenzsprungmuster 202 angegebene Belegung von Ressourcen und eine durch das zweite Zeit- und/oder Frequenzsprungmuster angegebene Belegung von Ressourcen können sich somit (z.B. vollständig oder zumindest teilweise, wie z.B. mehr als 50% (oder 60%, oder 70%, oder 80%, oder 90%)) voneinander unterscheiden.

Wie in Fig. 2 ferner zu erkennen ist, können durch das erste Zeit- und/oder Frequenzsprungmuster 202 ein erster Frequenzbereich 206 (z.B. eine erste (z.B. zusammenhängende) Gruppe von Frequenzkanälen) des Frequenzbands 200 und durch das zweite Zeit- und/oder Frequenzsprungmuster 204 ein zweiter Frequenzbereich 208 (z.B. eine zweite (z.B. zusammenhängende) Gruppe von Frequenzkanälen) des Frequenzbands belegt sein, wobei sich der erste Frequenzbereich 206 und der zweite Frequenzbereich 208 zumindest teilweise überlappen.

Der erste Frequenzbereich 206 und/oder der zweite Frequenzbereich 208 können dabei eine wesentlich (z.B. um zumindest den Faktor 5 (oder 10)) größere Bandbreite aufweisen als Empfangsfilter der Empfänger (Receiver oder Transceiver) der Teilnehmer 106_1-106_n.

Bei Ausführungsbeispielen können in dem Kommunikationssystem 100 das erste Funknetz und das zweite Funknetz parallel (z.B. gleichzeitig bzw. zumindest zeitlich überlappend (siehe Fig. 2)) verwendet werden. So ist es beispielsweise möglich, dass zur Übertragung von Daten zwischen der Basisstation 104 und einem ersten Teilnehmer 106_1 oder einer ersten Gruppe von Teilnehmern (z.B. 106_1-106_3) das erste Funknetz verwendet wird, während zur Übertragung von Daten zwischen der Basisstation 104 und einem zweiten Teilnehmer 106_4 oder einer zweiten Gruppe von Teilnehmern (z.B. 106_4-106_5) das zweite Funknetz verwendet wird. Auch ist es beispielsweise möglich, dass die Teilnehmer 106_1-106_n (und/oder die Basisstation 104) während des Betriebes zwischen dem ersten Funknetz (oder einem ersten Betriebsmodus in dem Daten unter Verwendung des ersten Funknetzes übertragen werden) und dem zweiten Funknetz (oder einem zweiten Betriebsmodus in dem Daten unter Verwendung des zweiten Funknetzes übertragen werden) wechseln, so können zum Beispiel zum Zeitpunkt t1 Daten zwischen einem der Teilnehmer 106_1 und der Basisstation 104 oder einem anderen Teilnehmer 106_2 unter Verwendung des ersten Funknetzes übertragen werden, während zum Zeitpunkt t2 Daten zwischen dem Teilnehmer 106_1 und der Basisstation 104 oder dem anderen Teilnehmer 106_2 unter Verwendung des zweiten Funknetzes übertragen werden. Auch können Daten von einem Teilnehmer 106_1 oder einer Gruppe von Teilnehmern 106_1-106_4 zu der Basisstation 104 unter Verwendung des ersten Funknetzes übertragen werden, während Daten von der Basisstation 104 zu dem Teilnehmer 106_1 oder der Gruppe von Teilnehmern 106_1-106_4 unter Verwendung des zweiten Funknetzes übertragen werden, oder umgekehrt.

Bei Ausführungsbeispielen kann die Basisstation 104 (oder eine andere zentrale Steuereinheit des Kommunikationssystems 100) eine Signalisierungsinformation, die ein zu verwendendes Funknetz aus dem ersten Funknetz und dem zweiten Funknetz signalisiert, zu einem Teilnehmer 106_1 oder einer Gruppe von Teilnehmern 106_1-106_4 übertragen (z.B. mittels einer Downlink-Datenübertragung), wobei der Teilnehmer 106_1 oder die Gruppe von Teilnehmern 106_1-106_4 ansprechend auf die Signalisierungsinformation in das signalisierte Funknetz wechseln können. Die Basisstation 104 kann das zu verwendende Funknetz z.B. in Abhängigkeit von Übertragungsanforderungen der zu übertragenen Daten (z.B. Latenz, Übertragungssicherheit, QoS) und/oder in Abhängigkeit von Betriebsparametern der Teilnehmer (z.B. zur Verfügung stehende Energie) und/oder in Abhängigkeit einer Auslastung des jeweiligen Funknetzes auswählen.

Natürlich ist es auch möglich, dass die Teilnehmer das zu verwendende Funknetz in Abhängigkeit von Übertragungsanforderungen der zu übertragenen Daten (z.B. Latenz, Übertragungssicherheit, QoS) und/oder in Abhängigkeit von eignen Betriebsparametern (z.B. zur Verfügung stehende Energie) selbst auswählen.

Bei Ausführungsbeispielen kann das erste Funknetz ein asynchrones Funknetz sein.

In einem asynchronen Funknetz können die Teilnehmer 106_1-106_n des Kommunikationssystems 100 ausgebildet sein, um Daten unkoordiniert (z.B. und asynchron) in Bezug auf andere Teilnehmer und/oder die Basisstation 104 des Kommunikationssystems 100 zu senden. Beispielsweise können die Teilnehmer 106_1-106_n ausgebildet sein, um Daten in vorgegebenen groben Abständen (z.B. stündlich, täglich, wöchentlich, halbjährlich, jährlich, usw.) oder ansprechend auf ein externes Ereignis (z.B. Abweichung eines Sensorwertes von einem Sollwert) zu senden. Hierbei kann der genaue Sendezeitpunkt und/oder die genaue Frequenz bzw. der genaue Frequenzkanal des Frequenzbands zur Übertragung der Daten von dem jeweiligen Teilnehmer selbst bestimmt werden. Der jeweilige Teilnehmer sendet die Daten hierbei unabhängig davon, ob ein anderer Teilnehmer und/oder die Basisstation 104 zum selben Zeitpunkt oder zeitlich überlappend und/oder auf derselben Frequenz bzw. demselben Frequenzkanal des Frequenzbands Daten überträgt.

Die Übertragung von Daten (z.B. eines Datenpakets) von einem der Teilnehmer 106_1-106_n, z.B. von dem Teilnehmer 106_1, zu der Basisstation 104 wird hierbei als Uplink-Datenübertragung bezeichnet, während die Übertragung von Daten von der Basisstation 104 zu einem der Teilnehmer 106_1-106_n, z.B. zu dem Teilnehmer 106_1, als Downlink-Datenübertragung bezeichnet wird. Die Uplink-Datenübertragung bezeichnet (oder umfasst) demnach die Übertragung eines Uplink-Datenpakets (bzw. einer Uplink-Nachricht) von dem jeweiligen Teilnehmer zu der Basisstation 104, während die Downlink-Datenübertragung die Übertragung eines Downlink-Datenpakets (bzw. einer Downlink-Nachricht) von der Basisstation 104 zu dem jeweiligen Teilnehmer bezeichnet (oder umfasst).

Da die Uplink-Datenübertragung des jeweiligen Teilnehmers 106_1-106_n unkoordiniert erfolgt und die Sendeempfängereinheit (Transceiver) des jeweiligen Teilnehmers 106_1-106_n in der Regel nur zur Datenübertragung aktiviert wird, erfolgt die Downlink-Datenübertragung zu dem jeweiligen Teilnehmer zeitlich synchronisiert zu der Uplink-Datenübertragung, d.h. nach einer vorgegebenen Zeit und/oder Frequenz nach der Uplink-Datenübertragung aktiviert der jeweilige Teilnehmer seine Sendeempfängereinheit (Transceiver) für ein vorgegebenes Zeitintervall (Empfangsfenster), um die Downlink-Datenübertragung zu empfangen, die von der Basisstation 104 ansprechend (z.B. in Reaktion auf) auf die Uplink-Datenübertragung (genau) innerhalb dieses Zeitintervalls gesendet wird. Optional kann die Downlink-Datenübertragung zu dem jeweiligen Teilnehmer auch in der Frequenz synchronisiert zu der jeweiligen Uplink-Datenübertragung sein, wie z.B. auf der gleichen Frequenz (im gleichen Frequenzkanal) oder mit einem vorgegebenen Frequenzabstand.

Ein Beispiel für ein solches asynchrones Funknetz ist das in ETSI TS 103 357 [6] spezifizierte Funknetz. Natürlich kann es sich bei dem asynchronen Funknetz auch um ein anderes asynchrones Funknetz handeln, wie z.B. LoRa, Sigfox oder WLAN.

Bei Ausführungsbeispielen kann das zweite Funknetz ein synchrones Funknetz sein.

In einem synchronen Funknetzwerk sind den Teilnehmern 106_1-106_n (z.B. durch die Basisstation 104) exklusive Ressourcen zur Übertragung der Daten zugewiesen, d.h. den Teilnehmern 106_1-106_n und der Basisstation 104 ist vorab bekannt in welchen Ressourcen Daten zu senden bzw. zu empfangen sind.

Um in einem synchronen Funknetzwerk die Synchronisation der Teilnehmer 106_1-106_n aufrechtzuerhalten können sog. Baken (engl. beacons) verwendet werden, die z.B. von der Basisstation 104 oder einer anderen koordinierenden Instand des Funknetzes ausgesendet werden. So können die Baken beispielsweise regelmäßig oder basierend auf einem im Funknetz bekannten Bakenübertragungsmuster ausgesendet werden, welches den Teilnehmern 106_1-106_n zum Beispiel bei der Anmeldung mitgeteilt werden kann. Ferner ist es möglich, dass in jeder Bake eine Information über eine Übertragung einer nachfolgenden Bake oder mehrerer nachfolgenden Baken enthalten ist, wie z.B. ein Zeitpunkt (oder Zeitpunkte), ein Frequenzkanal (oder Frequenzkanäle), und/oder ein Sprungmuster (oder Sprungmuster) der Übertragung der nachfolgenden Bake (oder der mehreren nachfolgenden Baken). Auch ist es möglich, dass die für den Empfang einer nachfolgenden Bake oder mehrerer nachfolgenden Baken erforderliche Information von einer mit der Bake übertragenen Information abgeleitet werden kann, wie z.B. einem Zustand eines Zufallszahlengenerators, wie z.B. einem PRBS Generator (PRBS = Pseudorandom Binary Sequence, dt. pseudozufällige binäre Sequenz), basierend auf dem die Übertragungen der Baken pseudozufällig in der Zeit und/oder Frequenz verteilt werden.

Die Baken können beispielsweise eine Synchronisationsinformation aufweisen, wie z.B. eine Synchronisationssequenz, basierend auf derer sich die Teilnehmer 106_1-106_n in dem Funknetz synchronisieren können. Basierend auf der Synchronisationsinformation ist es den Teilnehmern 106_1-106_n beispielsweise möglich etwaige (z.B. durch günstige Zeit- und oder Frequenzgeber bedingte) Zeit- und oder Frequenzoffsets auszugleichen.

Die Baken können ferner (oder alternativ) dazu genutzt werden, um die Teilnehmer 106_1-106_n des Funknetzes zu koordinieren. So können die Baken beispielsweise eine Koordinierungsinformation aufweisen mit der einem oder mehreren Teilnehmern die für die Übertagung zu verwendenden Ressourcen zugewiesen werden.

Ein Beispiel für ein solches synchrones Funknetz ist das in IEEE 802.15.4w spezifizierte Funknetz. Natürlich kann es sich bei dem synchronen Funknetz auch um ein anderes synchrones Funknetz handeln, wie z.B. NB-loT, GSM oder LTE.

Optional können die Basisstation 104 und die Teilnehmer 106_1-106_n des Kommunikationssystems 100 ausgebildet sein, um Daten basierend auf dem Telegram-Splitting-Verfahren (dt. Telegrammaufteilungsverfahren) zu übertragen. Hierbei werden auf Datensenderseite die zu übertragenen Daten, wie z.B. ein Telegramm bzw. Datenpaket (z.B. der physikalischen Schicht im OSI-Modell), beispielsweise ein Uplink-Datenpaket oder ein Downlink-Datenpaket, auf eine Mehrzahl von Sub-Datenpaketen (oder Teil-Datenpaketen) aufgeteilt und die Sub-Datenpakete nicht zusammenhängend, sondern entsprechend eines Zeit- und/oder Frequenzsprungmusters in der Zeit und/oder in der Frequenz verteilt übertragen, wobei auf Datenempfängerseite die Sub-Datenpakete wieder zusammenfügt (oder kombiniert) werden, um das Datenpaket zu erhalten. Jedes der Sub-Datenpakete enthält dabei nur einen Teil des Datenpakets. Das Datenpaket kann ferner codiert (z.B. kanalcodiert oder fehlerschutzcodiert) sein, so dass zum fehlerfreien Decodieren des Datenpakets nicht alle Sub-Datenpakete, sondern nur ein Teil der Sub-Datenpakete erforderlich ist.

Die Verteilung der Mehrzahl von Sub-Datenpaketen in der Zeit- und/oder Frequenz kann, wie bereits erwähnt, entsprechend eines Zeit- und/oder Frequenzsprungmusters erfolgen, wobei sich die Zeit- und/oder Frequenzsprungmuster des ersten Funknetzes und des zweiten Funknetzes voneinander unterscheiden, wie dies bereits oben in Bezug auf Fig. 2 erläutert wurde.

Ein Zeitsprungmuster kann dabei eine Abfolge von Sendezeitpunkten oder Sendezeitabständen angeben, mit denen die Sub-Datenpakete gesendet werden. Beispielsweise kann ein erstes Sub-Datenpaket zu einem ersten Sendezeitpunkt (oder in einem ersten Sendezeitschlitz) und ein zweites Sub-Datenpaket zu einem zweiten Sendezeitpunkt (oder in einem zweiten Sendezeitschlitz) gesendet werden, wobei der erste Sendezeitpunkt und der zweite Sendezeitpunkt unterschiedlich sind. Das Zeitsprungmuster kann dabei den ersten Sendezeitpunkt und den zweiten Sendezeitpunkt definieren (oder vorgeben, oder angeben). Alternativ kann das Zeitsprungmuster den ersten Sendezeitpunkt und einen zeitlichen Abstand zwischen dem ersten Sendezeitpunkt und dem zweiten Sendezeitpunkt angeben. Natürlich kann das Zeitsprungmuster auch nur den zeitlichen Abstand zwischen dem ersten Zeitpunkt und dem zweiten Sendezeitpunkt angeben. Zwischen den Sub-Datenpaketen können Sendepausen vorhanden sein in denen nicht gesendet wird. Die Sub-Datenpakete können sich auch zeitlich überlappen (überschneiden).

Ein Frequenzsprungmuster kann eine Abfolge von Sendefrequenzen oder Sendefrequenzsprüngen angeben, mit denen die Sub-Datenpakete gesendet werden. Beispielsweise kann ein erstes Sub-Datenpaket mit einer ersten Sendefrequenz (oder in einem ersten Frequenzkanal) und ein zweites Sub-Datenpaket mit einer zweiten Sendefrequenz (oder in einem zweiten Frequenzkanal) gesendet werden, wobei die erste Sendefrequenz und die zweite Sendefrequenz unterschiedlich sind. Das Frequenzsprungmuster kann dabei die erste Sendefrequenz und die zweite Sendefrequenz definieren (oder vorgeben, oder angeben). Alternativ kann das Frequenzsprungmuster die erste Sendefrequenz und einen Frequenzabstand (Sendefrequenzsprung) zwischen der ersten Sendefrequenz und der zweiten Sendefrequenz angeben. Natürlich kann das Frequenzsprungmuster auch nur den Frequenzabstand (Sendefrequenzsprung) zwischen der ersten Sendefrequenz und der zweiten Sendefrequenz angeben.

Natürlich können die Mehrzahl von Sub-Datenpaketes auch sowohl in der Zeit- als auch in der Frequenz verteilt übertragen werden. Die Verteilung der Mehrzahl von Sub-Datenpaketen in der Zeit und in der Frequenz kann entsprechend einem Zeit- und Frequenzsprungmuster erfolgen. Ein Zeit- und Frequenzsprungmuster kann die Kombination aus einem Zeitsprungmuster und einem Frequenzsprungmuster sein, d.h. eine Abfolge von Sendezeitpunkten oder Sendezeitabständen mit denen die Sub-Datenpakete übertragen werden, wobei den Sendezeitpunkten (oder Sendezeitabständen) Sendefrequenzen (oder Sendefrequenzsprünge) zugeordnet sind.

Eine Bandbreite der durch das Frequenzsprungmuster angegebene Belegung des Frequenzbands kann dabei wesentlich (z.B. zumindest um den Faktor 5 (oder 10) größer sein als eine Bandbreite der Empfangsfilter der Empfänger (Receiver oder Transceiver) der Teilnehmer 106_1-106_n. Zum Empfangen einer Telegram-Splitting-basierten Datenübertragung kann der jeweilige Teilnehmer daher ausgebildet sein, um die Empfangsfrequenz seines Empfängers basierend auf dem Frequenzsprungmuster (z.B. zu den jeweiligen durch das Zeitsprungmuster angegebenen Zeiten oder Zeitschlitzen) auf die jeweiligen durch das Frequenzsprungmuster angegebenen Frequenzen oder Frequenzkanäle des Frequenzbands umzuschalten, um die Mehrzahl von Sub-Datenpaketen zu empfangen.

Optional kann bei Ausführungsbeispielen ein Zugriff auf das Frequenzband 200 durch das jeweilige Funknetz basierend auf unterschiedlichen Kanalzugriffsmustern erfolgen. Mit anderen Worten, Datenübertragungen des ersten Funknetzes (z.B. Datenübertragungen zwischen einer ersten Gruppe von Teilnehmern 106_1-106_3 und/oder der Basisstation 104, die das erste Funknetz nutzten) und Datenübertragungen des zweiten Funknetzes (z.B. Datenübertragungen zwischen einer zweiten Gruppe von Teilnehmern 106_3-106_5 und/oder der Basisstation 104, die das zweite Funknetz nutzen) können durch unterschiedliche Kanalzugriffsmuster voneinander getrennt werden. Durch die unterschiedlichen Kanalzugriffsmuster können die Datenübertragungen der jeweiligen Funknetze dabei derart in der Zeit- und/oder Frequenz verteilt werden, dass sich diese nicht oder höchstens so stark überlappen, dass es zu keinem Totalausfall des jeweiligen Funknetzes kommt.

Im Detail kann ein Kanalzugriffsmuster eine von dem jeweiligen Funknetz verwendbare frequenz- und/oder zeitsprungbasierte Belegung (z.B. von Ressourcen) des Frequenzbands 200 (z.B. des jeweiligen Frequenzbereich 206 und 208 des Frequenzbands 200) angeben. Das von dem jeweiligen Teilnehmer 106_1-106_n bzw. der Basisstation 104 zur Übertragung von Daten genutzte Zeit- und/oder Frequenzsprungmuster kann dabei die zu verwendende frequenz- und/oder zeitsprungbasierte Belegung aus der der verwendbaren frequenz- und/oder zeitsprungbasierte Belegung des jeweiligen Funknetzes angeben.

In dem ersten Funknetz können Daten also entsprechend eines ersten Kanalzugriffsmusters übertragen werden, wobei das erste Kanalzugriffsmuster eine verwendbare frequenz- und/oder zeitsprungbasierte Belegung des Frequenzbands 200 angibt. Das erste Zeit- und/oder Frequenzsprungmuster 202, welches z.B. von dem Teilnehmer 106_1 oder der Basisstation 104 zur Übertragung von Daten genutzt werden kann, gibt dabei eine (echte) Teilmenge der durch das erste Kanalzugriffsmuster angegebenen verwendbaren frequenz- und/oder zeitsprungbasierte Belegung des Frequenzbands 200 (z.B. des ersten Frequenzbereichs 206 des Frequenzbands 200) an.

Genauso können in dem zweiten Funknetz Daten entsprechend eines zweiten Kanalzugriffsmusters übertragen werden, wobei das zweite Kanalzugriffsmuster eine verwendbare frequenz- und/oder zeitsprungbasierte Belegung des Frequenzbands 200 angibt. Das zweite Zeit- und/oder Frequenzsprungmuster 204, welches z.B. von dem Teilnehmer 106_4 oder der Basisstation 104 zur Übertragung von Daten genutzt werden kann, gibt dabei eine (echte) Teilmenge der durch das zweite Kanalzugriffsmuster angegebenen verwendbaren frequenz- und/oder zeitsprungbasierte Belegung des Frequenzbands 200 (z.B. des zweiten Frequenzbereichs 208 des Frequenzbands 200) an.

Natürlich können in dem jeweiligen Funknetz auch mehrere Zeit- und/Frequenzsprungmuster zur Verfügung stehen basierend auf denen ein Zugriff auf die vom jeweiligen Kanalzugriffsmuster angebotene zeit- und/oder Frequenzsprungbasierte Belegung des Frequenzbands 200 erfolgt.

So können den Teilnehmern 106_1-106_3 und/oder der Basisstation 104, die zur Übertragung von Daten das erste Funknetz nutzen, ein erster Satz von Zeit- und/oder Frequenzsprungmustern zur Verfügung stehen, wobei die Zeit- und/oder Frequenzsprungmuster jeweils eine (echte) Teilmenge der durch das erste Kanalzugriffsmuster angegebenen verwendbaren frequenz- und/oder zeitsprungbasierte Belegung des Frequenzbands 200 (z.B. des ersten Frequenzbereichs 206 des Frequenzbands 200) angeben. Die Zeit- und/oder Frequenzsprungmuster des ersten Satzes von Zeit- und/oder Frequenzsprungmustern können sich dabei voneinander unterscheiden, beispielsweise derart, dass sich diese nicht überlappen oder höchstens so stark überlappen, dass empfängerseitig eine fehlerfreie Decodierung der mit den jeweiligen (Sub-)Datenpaketen zu übertragenen Daten möglich ist. Beispielsweise können die Zeit- und/oder Frequenzsprungmuster des ersten Satzes von Zeit- und/oder Frequenzsprungmustern möglichst geringe Autokorrelationsfunktionen und/oder Kreuzkorrelationsfunktionen aufweisen.

Genauso können den Teilnehmern 106_4-106_5 und/oder der Basisstation 104, die zur Übertragung von Daten das zweite Funknetz nutzen, ein zweiter Satz von Zeit- und/oder Frequenzsprungmustern zur Verfügung stehen, wobei die Zeit- und/oder Frequenzsprungmuster jeweils eine (echte) Teilmenge der durch das zweite Kanalzugriffsmuster angegebenen verwendbaren frequenz- und/oder zeitsprungbasierte Belegung des Frequenzbands 200 (z.B. des zweiten Frequenzbereichs 208 des Frequenzbands 200) angeben. Die Zeit- und/oder Frequenzsprungmuster des zweiten Satzes von Zeit- und/oder Frequenzsprungmustern können sich dabei voneinander unterscheiden, beispielsweise derart, dass sich diese nicht überlappen oder höchstens so stark überlappen, dass empfängerseitig eine fehlerfreie Decodierung der mit den jeweiligen (Sub-)Datenpaketen zu übertragenen Daten möglich ist. Beispielsweise können die Zeit- und/oder Frequenzsprungmuster des zweiten Satzes von Zeit- und/oder Frequenzsprungmustern möglichst geringe Autokorrelationsfunktionen und/oder Kreuzkorrelationsfunktionen aufweisen.

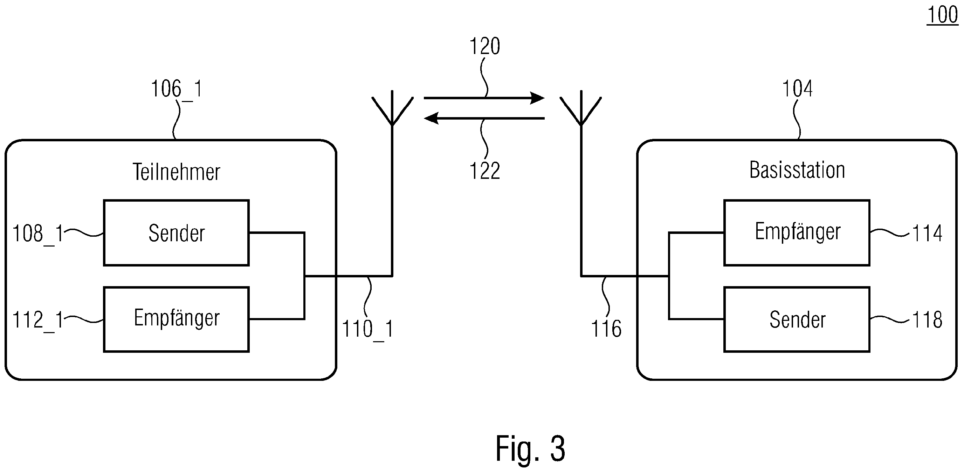

Fig. 3 zeigt ein schematisches Blockschaltbild der Basisstation 104 und eines der Teilnehmer 106_1-106_n des in Fig. 1 gezeigten Kommunikationssystems 100, gemäß einem Ausführungsbeispiel der vorliegenden Erfindung.

Der Teilnehmer 106_1 kann einen Sender (bzw. Sendemodul; Transmitter) 108_1 aufweisen, der ausgebildet ist, um die Uplink-Datenübertragung 120 zu der Basisstation 104 zu senden. Der Sender 108_1 kann mit einer Antenne 110_1 des Teilnehmers 106_1 verbunden sein. Der Teilnehmer 106_1 kann ferner einen Empfänger (bzw. Empfangsmodul; Receiver) 112_1 aufweisen, der ausgebildet ist, um die Downlink-Datenübertragung 122 von der Basisstation 104 zu empfangen. Der Empfänger 112_1 kann mit der Antenne 110_1 oder einer weiteren Antenne des Teilnehmers 106_1 verbunden sein. Der Teilnehmer 106_1 kann auch einen kombinierten Sendeempfänger (bzw. Sendeempfangsmodul; Transceiver) aufweisen.

Die Basisstation 104 kann einen Empfänger (bzw. Empfangsmodul; Receiver) 114 aufweisen, der ausgebildet ist, um die Uplink-Datenübertragung 120 von dem Teilnehmer 106_1 zu empfangen. Der Empfänger 114 kann mit einer Antenne 116 der Basisstation 104 verbunden sein. Die Basisstation 104 kann ferner einen Sender (bzw. Sendemodul; Transmitter) 118 aufweisen, der ausgebildet ist, um die Downlink-Datenübertragung 122 zu dem Teilnehmer 106_1 zu senden. Der Sender 118 kann mit der Antenne 116 oder einer weiteren Antenne der Basisstation 104 verbunden sein. Die Basisstation 104 kann auch einen kombinierten Sendeempfänger (bzw. Sendeempfangsmodul; Transceiver) aufweisen. Die Sendeempfängereinheit (Transceiver) der Basisstation 104 kann beispielsweise mittels eines SDR-Transceivers (SDR = Software Defined Radio) implementiert werden.

Im Folgenden werden Ausführungsbeispiele eines Teilnehmers 106_1 und einer Basisstation 104 beschrieben, die z.B. in dem oben in Bezug auf die Fig. 1 bis 3 beschriebenen Kommunikationssystem 100 eingesetzt werden können. Natürlich können die nachfolgend beschriebenen Ausführungsbeispiele des Teilnehmers 106_1 und/oder der Basisstation 104 auch in anderen Kommunikationssystemen umgesetzt bzw. implementiert werden.

### 1. Kombination zweier unterschiedlicher Klassen von Systemen im gleichen Frequenzband

Um die Vorteile aus beiden Klassen (z.B. asynchron und synchron) von Systemen nutzten zu können, kann eine Kombination der beiden Klassen von Systemen vorgenommen werden. Dies ist im Allgemeinen jedoch nicht ohne Mehraufwand bezüglich der Hardwarekosten und/oder des Stromverbrauchs umsetzbar, da die Systeme in unterschiedlichen Frequenzbändern arbeiten (kommunizieren).

Es gibt auch Systeme, die im gleichen Frequenzband kommunizieren, jedoch hat dies dann den Nachteil der gegenseitigen Störung der beiden Systeme. Ein Beispiel zweier Systeme, die im gleichen Frequenzband arbeiten und teilweise auch in der gleichen Hardware verbaut sind, ist Bluetooth und WLAN. Diese beiden Systeme würden sich aus Sicht des Mehraufwandes (Hardwarekosten, Stromverbrauch) wie im vorherigen Absatz erwähnt, ideal ergänzen. Aus der Literatur (z. B. in [4]) ist jedoch einschlägig bekannt, dass es zwischen den beiden Systemen Störungen (sog. Interferenzen) während der Übertragung durch die Luft gibt.

Eine sinnvolle parallele Operation beider Systeme, um die Vorteile beider Systeme zu nutzen, ist somit nicht gegeben.

An dieser Stelle setzen Ausführungsbeispiele der vorliegenden Erfindung an, indem zwei Systeme kombiniert werden, die das Telegrammaufteilungs-Verfahren [1], [2], [3] (kurz: TSMA, TS) als Basis für die Übertragung im Kanal benutzen.

Durch die Übertragung mit TSMA ist es möglich einen gewissen Grad an Störung im Kanal (typ. bis ca. 50% der Teilpakete dürfen gestört sein) ohne Paketverluste (und somit auch ohne Datenverlust) zu tolerieren. Werden die Sprungmuster der beiden Systeme so gewählt, dass weniger als die maximal zulässigen Störungen pro Übertragung gestört werden, können beide Systeme parallel im gleichen Frequenzband arbeiten.

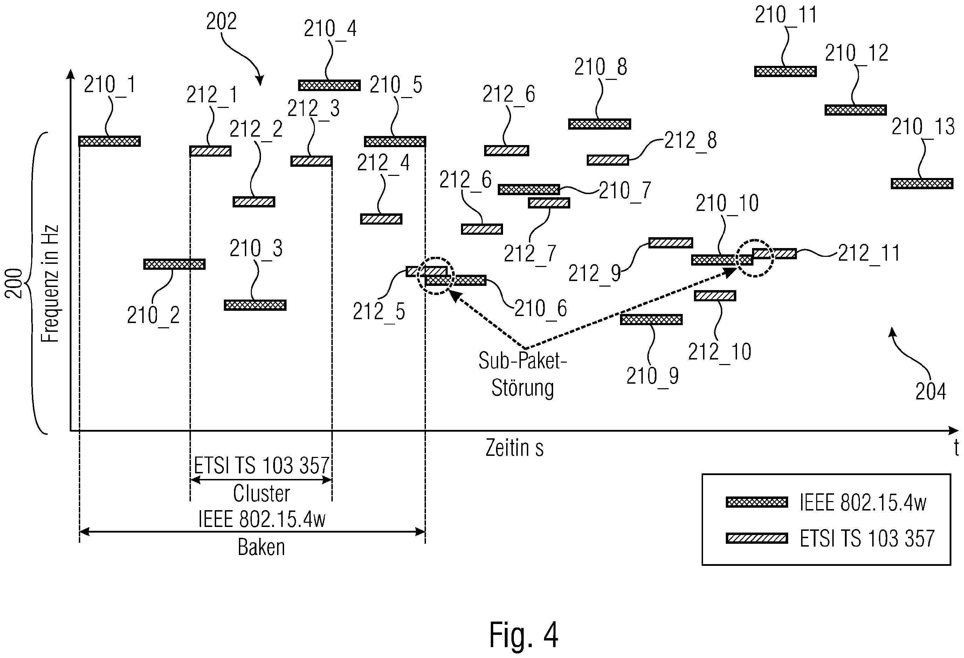

Eine solche Kombination der zwei Systeme ist bespielhaft in Fig. 4 zu sehen.

Im Detail zeigt Fig. 4 in einem Diagramm eine Belegung des Kommunikationskanals (z.B. Frequenzbands 200) bei der Übertragung von Sub-Datenpaketen 210_1-210_13 in einem ersten Kommunikationssystem entsprechend eines ersten Zeit- und/oder Frequenzsprungmusters 202 und der Übertragung von Sub-Datenpaketen 212_1-212_11 in einem zweiten Kommunikationssystem entsprechend eines zweiten Zeit- und/oder Frequenzsprungmusters 204, gemäß einem Ausführungsbeispiel der vorliegenden Erfindung. Dabei beschreibt die Ordinate die Frequenz und die Abszisse die Zeit.

Wie in Fig. 4 beispielhaft gezeigt ist, kann das erste Kommunikationssystem das in ETSI TS 103 357 [6] spezifizierte Funknetz nutzen, während das zweite Kommunikationssystem das in IEEE 802.15.4w [5] spezifizierte Funknetz nutzen kann. Fig. 4 zeigt also eine Beispielhafte Kombination eines IEEE 802.15.4w [5] Systems mit einem ETSI TS 103 357 [6] System im gleichen Frequenzband 200, wobei es zu vereinzelten Störungen in den Sub-Datenpaketen 210_6,212_4 und 210_10,212_11 kommt.

Wie in Fig. 4 zu erkennen ist, kann es zwischen den beiden Systemen zwar zu Störungen kommen, aber diese begrenzen sich auf einzelne Sub-Datenpakete 210_6,212_4 und 210_10,212_11 (entspricht einer Teilstörung die unter der tolerierbaren Schwelle liegt), so dass die Decodierung der Daten in beiden Systemen möglich ist.

Die Bandbreiten der beiden Systeme müssen nicht identisch sein. So kann beispielsweise das ETSI TS 103 357 [6] System 50 Kanäle und das IEEE 802.15.4.w System [5] 72 Kanäle besitzen. Ebenfalls kann die Kanalbandbreite in beiden Systemen gleich oder unterschiedlich sein. Weiterhin können die Datenraten, Datenlängen, Sub-Datenpaketlängen und die Modulation gleich oder unterschiedlich sein.

Ein paralleler Empfang (und ggf. parallele Aussendung) der beiden Systeme kann beispielsweise über ein sog. "Software Defined Radio" (kurz: SDR) erfolgen.

Bei Ausführungsbeispielen teilen sich beide Systeme das Frequenzband 200. Durch die Wahl von Telegram Splitting kommt es zwar zu Störungen bei einzelnen Sub-Datenpaketen 210_6,212_4 und 210_10,212_11, aber zu keinem Verlust der ursprünglichen Datenpakete.

### 1.1 Wahl der Sprungmuster

Herkömmlicherweise werden die Sprungmuster der Systeme so gewählt, dass sie eine möglichst gute Eigenstörfestigkeit und eine möglichst gute Störfestigkeit gegen klassische Fremdstörungen (z. B. WLAN, Sigfox, LoRa) besitzen.

Durch die Kombination der beiden Systeme ergibt sich nun gegenseitig ebenfalls eine Fremdstörung (Störung durch ein anderes System mit anderen Systemparametern). Da jedoch die Sprungmuster des anderen Systems gegenseitig bekannt sind, können die Sprungmuster des Systems so definiert werden, dass die gegenseitige Störung der Systeme minimiert wird.

Dies kann beispielsweise dadurch erreicht werden, das neben der Betrachtung der jeweiligen Autokorrelationseigenschaften der Sprungmuster der Systeme, auch die gegenseitigen Kreuzkorrelationseigenschaften der Sprungmuster betrachtet und optimiert werden.

Bei Ausführungsbeispielen können die Sprungmuster möglichst orthogonal gewählt werden, z.B. so dass eine garantierte QoS erreicht wird (ohne weitere Fremdstörung).

### 1.2 Teilüberlappende Sprungmuster

Ist die Empfangsbandbreite des Empfängers (z.B. der Basisstation 104) größer als die Systembandbreite des Systems mit der größeren Bandbreite, ist es möglich beide Systeme nur im teilüberlappenden Modus zu betreiben. Das bedeutet, dass nur ein Teil der zur Verfügung stehenden Bandbreite parallel von beiden Systemen benutzt.

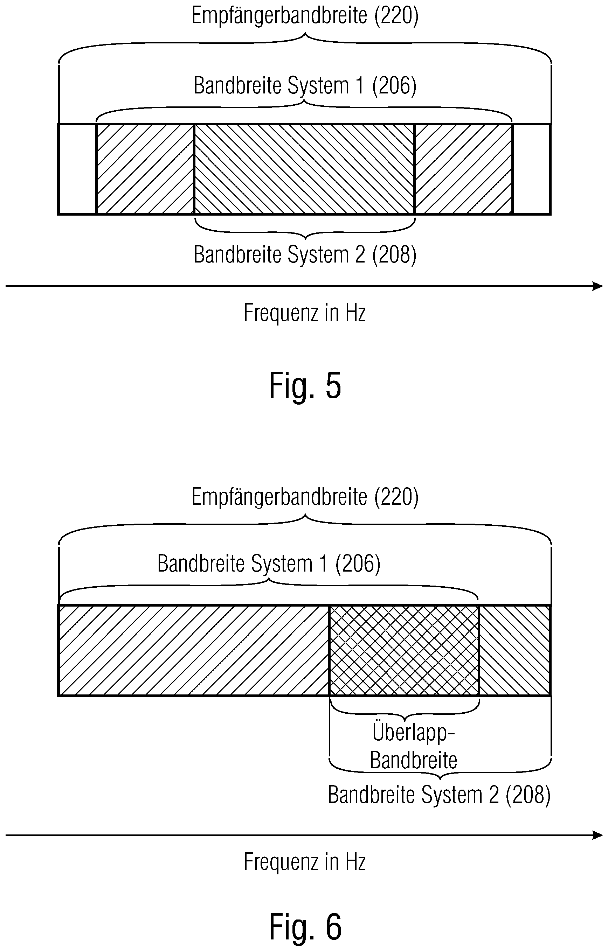

Fig. 5 zeigt eine Bandbreite eines ersten Systems nach Abschnitt 1, indem die gesamte genutzte Bandbreite vom zweiten System in der genutzten Bandbreite vom ersten System enthalten ist. Beide Systeme liegen gemäß Abschnitt 1 vollständig innerhalb des Empfangsfensters des Empfängers (z.B. der Basisstation 104).

Im Gegensatz zu Fig. 5 wird in dem in Fig. 6 gezeigten Ausführungsbeispiel die gesamte zur Verfügung stehende Bandbreite (entweder des Kanals oder des Empfängers) ausgenutzt. Dabei wurde das erste System an die untere Frequenzkante und das zweite System an die obere Frequenzkante geschoben. Durch die Verschiebung der beiden Systeme reduziert sich der Überlappbereich und somit reduziert sich auch die Anzahl der Störungen.

Bei Ausführungsbeispielen kann das genutzte Frequenzband 200 unterteilt werden in einen Bereich den beide Systeme nutzen und einen Bereich der nur von jeweils einem System genutzt wird. Der Empfänger (z.B. die Basisstation 104) kann jedoch zu jedem Zeitpunkt die gesamte Bandbreite empfangen.

### 1.3 Dynamische Ressourceneinteilung

Die verfügbaren Ressourcen können auch dynamisch in Abhängigkeit des Bedarfs auf synchrone und asynchrone Kommunikation verteilt werden. Werden z.B. gerade wenige synchrone Nachrichten übertragen können Kapazitäten auf den asynchronen Modus verlagert werden und umgekehrt. Insbesondere wenn ein gemeinsamer Satz von Sprungmustern verwendet wird können so dynamisch bestimmte Sprungmuster für synchrone (koordinierte) Übertragungen reserviert sein um Vollkollisionen mit asynchronen Übertragungen auszuschließen. Werden diese reservierten Sprungmuster gerade nicht für den synchronen Modus benötigt (geringes Aufkommen etc.), kann die Basisstation 104 diese für asynchrone Übertragungen freigeben (Signalisierung z.B. in Beacon), um dort die Kapazität zu erhöhen. Analog kann dieses Prinzip z.B. auf Frequenzträger angewendet werden sofern die Systeme eine entsprechende Konfiguration unterstützen.

Bei Ausführungsbeispielen können Ressourcen (z.B. Sprungmuster, Frequenzen, etc.) bedarfsabhängig, dynamisch zwischen synchronen und asynchronen Modus (System) verteilt werden.

In einem weiteren Schritt der Vollintegration können CAP (CAP = Contention Access Period, dt. konkurrenzbasierte Zugriffsperiode) und CFP (CFP = Contention Free Period, dt. konkurrenzfreie Zugriffsperiode) des synchronen Modus nicht mehr zeitlich, sondern durch Sprungmuster definiert sein. Asynchrone Übertragungen sind dann implizit CAP Übertragungen und verwenden entsprechend freigegebene Sprungmuster. Umgekehrt kann der gesamte Zeitbereich gleichzeitig für Scheduling von CFP Übertragungen mit entsprechend reservierten Sprungmustern verwendet werden.

### 2. Gleiche Hardware mit eigenen Softwareteilen

In der Praxis ist die Notwendigkeit für neue Funkstandards im Regelfall auch eine neue Netz-Infrastruktur aufbauen zu müssen, wohl die größte Hürde bei deren Adoption. Daher stellt die Fähigkeit, ein zweites/neues System per Software-Update auf einem existierenden System bzw. dessen Infrastruktur nachzurüsten einen signifikanten Wettbewerbsvorteil dar. Ein vergleichbares Problem besteht auf der Seite der Endknoten: Da bereits in einer einzigen, typischen IoT-Installation eine sehr große Zahl an Endknoten ausgebracht wird (u.U. zehnbis hunderttausende), ist aus Sicht des Systembetreibers auch in Bezug auf die Endknoten die Upgrade-Fähigkeit per Software ein signifikanter wirtschaftlicher Vorteil.

Da die beiden Systeme sich wie unter Abschnitt 1 beschrieben ein (mindestens teilweise) gemeinsames Frequenzband teilen, ist es möglich, auf Seiten der Basisstation 104 einen gemeinsamen Empfänger (bzw. Sender) zu nutzen und die Nachrichten der beiden Systeme separat aus dem IQ-Datenstrom zu detektieren bzw. dekodieren.

Ähnliches gilt für die Teilnehmer 106_1-106_n (z.B. Endknoten): Aufgrund des gleichen Frequenzbandes für beide Systeme können diese den gleichen Funkchip für beide Übertragungen nutzen. Dadurch ist es möglich, ein existierendes System (alleine) durch ein Software-Upgrade auf die Unterstützung für mehrere Systeme, insbesondere wie oben beschrieben ein synchrones und ein asynchrones, aufzurüsten.

Bei Ausführungsbeispielen können zwei verschiedene Funksysteme parallel auf derselben Hardware (z.B. Basisstation 104) laufen und sich deren IQ-Datenstrom teilen. Dasselbe ist für die Teilnehmer (z.B. Endknoten) des kombinierten Systems 100 möglich.

In einer speziellen Ausprägung können die beiden Systeme ein synchrones und ein asynchrones Funksystem sein, die sich ein Frequenzband 200 teilen.

In einer speziellen Ausprägung können die beiden Systeme als separate Softwareprogramme ausgestaltet sein, die parallel / "zeitgleich" auf derselben Hardware (z.B. Basisstation 104 und/oder Teilnehmer 106_1-106_n (z.B. Endknoten) des kombinierten Funksystems 100) ausgeführt werden können.

### 3. Dynamischer Wechsel der Teilnehmer (und/oder der Basisstation) zwischen den Systemen (Funknetzten)

In den Abschnitten 1 und 2 ist davon ausgegangen worden, dass beide Systeme zwar im gleichen Frequenzband parallel arbeiten, aber beide Systeme trotzdem voneinander unabhängig sind.

So muss beispielsweise ein Teilnehmer (z.B. Knoten), der in beiden Systemen kommunizieren möchte, sich auch an beiden Systemen getrennt anmelden (oder angemeldet worden sein).

Es ist jedoch auch möglich, dass beide Systeme (oder Funknetze) ein gemeinsames Netzwerk Management (welches z.B. auf der Basisstation 104 ausgeführt werden kann) verwenden. Damit kann sich ein Teilnehmer 106_1 (z.B. Knoten) nur einmal in einem der beiden Netzwerke (oder Funknetze) anmelden und kann dann direkt über beide Systeme (oder Funknetze) die Daten verschicken. Notwendige Daten des jeweils anderen Systems (oder Funknetzes) (z.B. desjenigen, welches nicht für die Anmeldung genutzt wird) können während der Anmeldung (engl. Attach) mitgeteilt oder ausgetauscht werden.

Bei Ausführungsbeispielen können beide Systeme (oder Funknetze) ein gemeinsames Netzwerk Management nutzen (welches beispielsweise auf der Basisstation 104 oder einer anderen zentralen Steuereinheit des Kommunikationssystems 100 ausgeführt werden kann). Somit kann jeder Teilnehmer 106_1-106_n nach Bedarf (z.B. entsprechend der Latenzanforderungen) die Daten über das besser geeignete System (oder Funknetz) übermitteln.

Bei Ausführungsbeispielen können während und/oder nach der Anmeldung des Teilnehmers 106_1 in dem einen Netzwerk (oder Funknetz) notwendige Daten (z. B. Systemparameter) über das andere Netzwerk (oder Funknetz) mitgeteilt werden.

### 4. Asynchrone Anmeldung (engl. Attach) im synchronen Netzwerk (Funknetz)

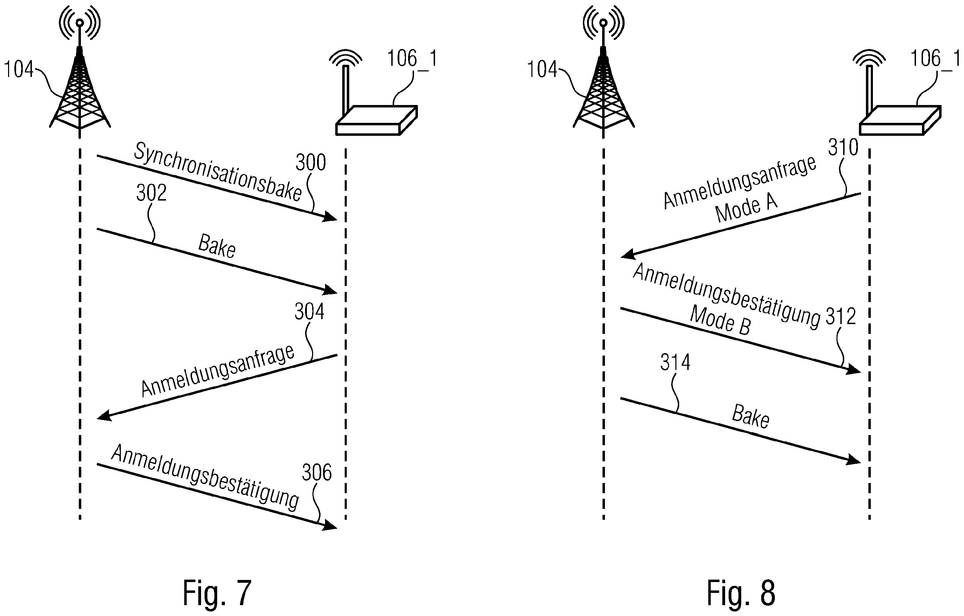

Möchten sich in einem reinen synchronen Netzwerk (Funknetz) neue Teilnehmer (z.B. Knoten) registrieren, müssen diese, wie in Fig. 7 gezeigt ist, eine sog.

Synchronisationsnachricht (z.B. Synchronisationsbake (engl. Sync Beacon)) empfangen. Diese Synchronisationsnachricht enthält die notwendigen Informationen um den folgenden (und auch alle weiteren) Baken (engl. Beacon) ebenfalls empfangen zu können.

Im Detail zeigt Fig. 7 ein Ablaufdiagramm einer Anmeldung eines Teilnehmers 106_1 in einem synchronen Funknetz. In einem ersten Schritt 300 wird eine Synchronisationsbake (engl. Sync Beacon) von der Basisstation 104 ausgesendet, die von dem Teilnehmer 106_1 empfangen werden kann. In einem zweiten Schritt 302 wird eine Bake von der Basisstation 104 ausgesendet, die der Teilnehmer 106_1 basierend auf einer in der Synchronisationsbake enthaltenen Information empfangen kann. In einem dritten Schritt 304 wird eine Uplink-Datenübertragung mit einer sog. Anmeldungsanfrage (engl. Attach Request) von dem Teilnehmer 106_1 zu der Basisstation 104 übertragen. In einem vierten Schritt 306 wird eine Downlink-Datenübertragung mit einer sog. Anmeldungsbestätigung (engl. Attach Accept) von der Basisstation 104 zu dem Teilnehmer 106_1 übertragen.

Mit anderen Worten, Fig. 7 zeigt eine Aussendung einer Synchronisationsnachricht vor der Bake (engl. Beacon). Nach dem Empfang der Bake kann der Teilnehmer eine Anmeldungsanfrage (engl. Attach Request) an die Basisstation 104 senden, welche diesen mit einer Anmeldungsbestätigung (engl. Attach Accept) bestätigen kann.

Diese Methodik besitzt jedoch zwei Nachteile, wie im Folgenden ausgeführt wird. Wird die Synchronisationsnachricht nur sehr selten ausgesendet (z.B. nur alle 30 Minuten) kann es mitunter relativ lange dauern, bis sich ein neuer Teilnehmer 106_1 im Netzwerk (Funknetz) anmelden kann. Dies stellt bezüglich des Stromverbrauchs im Teilnehmer 106_1 ein großes Problem dar, da der Teilnehmer 106_1 über die gesamte Dauer aktiviert sein muss. Ein Batteriebetrieb ist somit nicht sinnvoll möglich.

Um Teilnehmer (z.B. Knoten 106_1) mit Batteriebetrieb trotzdem einsetzen zu können müsste die Synchronisationsnachricht deutlich öfter ausgesendet werden, was zum zweiten Nachteil dieser Methodik führt. Wird das System (oder Funknetz) in den sog. ISM- oder SRD-Bändern betrieben, steht jedem Teilnehmer 106_1-106_n, als auch der Basisstation 104 nur ein gewisser DutyCycle zur Verfügung. Das heißt die Basisstation 104 darf nur einen gewissen Prozentsatz der Zeit (z.B. im Mittel über eine Stunde) Nachrichten aussenden. Wird nun häufig die Synchronisationsnachricht versendet, steht kaum noch Sendezeit für die Bake und die Datenpakete zur Verfügung.

Bei Ausführungsbeispielen kann jedoch durch die Möglichkeit, dass nun beide Systeme (oder Funknetze) parallel im gleichen Band arbeiten und nach Abschnitt 3 auch ein gemeinsames Netzwerk Management verwenden, eine asynchrone Anmeldung (engl. Attach) in das synchrone Netzwerk erfolgen. Dieses Schema ist grafisch in Fig. 8 gezeigt.

Im Detail zeigt Fig. 8 ein Ablaufdiagramms eines Wechsels eines Teilnehmers 106_1 von dem asynchronen Funknetz in das synchrone Funknetzwerk, gemäß einem Ausführungsbeispiel der vorliegenden Erfindung. In einem ersten Schritt 310 kann unter Verwendung des asynchronen Funknetzes eine Uplink-Datenübertragung mit einer Anmeldungsanfrage (engl. Attach Uplink) von dem Teilnehmer 106_1 an die Basisstation 104 übertragen werden. In einem zweiten Schritt 312 kann unter Verwendung des asynchronen Funknetzes eine Downlink-Datenübertragung mit einer Anmeldungsbestätigung (engl. Ack + Assist) von der Basisstation 104 an den Teilnehmer 106_1 übertragen werden, wobei die Downlink-Datenübertragung zeitlich synchronisiert zu der Uplink-Datenübertragung erfolgt, wie dies oben in Bezug auf Fig. 1 bereits ausführlich erläutert wurde. Die Downlink-Datenübertragung enthält dabei eine Signalisierungsinformation über eine Übertragung einer oder mehrerer Baken des synchronen Funknetzes, so dass der Teilnehmer 106_1 in einem dritten Schritt 314 basierend auf der Signalisierungsinformation eine solche Bake des synchronen Funknetzes empfangen kann und somit während des Betriebs von dem asynchronen Funknetz in das synchrone Funknetz wechseln kann.

Mit anderen Worten, der Teilnehmer 106_1 kann eine asynchrone Anmeldungsanfrage (engl. Attach Request) (z.B. Mode A in [6]) im Uplink senden. Dieser kann mit einer asynchronen Anmeldungsbestätigung (engl. Attach Accept) (Ack + Assist; z.B. Mode B in [6]) bestätigt werden. Als Teil der Anmeldungsbestätigung (engl. Attach Accept) kann dem Teilnehmer 106_1 der Zeitpunkt der Bake (und ggf. weitere Parameter) in der asynchronen Nachricht mitgeteilt werden. In [6] kann hierfür beispielsweise das TSI Feld verwendet werden. Weitere Informationen zur Frequenz, Sprungmuster, usw. können in sog. Erweiterungsdaten (engl. Extension-Data) vorhanden sein.

Wie bereits erwähnt kann bei Ausführungsbeispielen die Downlink-Datenübertragung (z.B. mit der Anmeldungsbestätigung) eine Signalisierungsinformation über eine Übertragung zumindest einer Bake des synchronen Funknetzes aufweisen. Die Signalisierungsinformation kann beispielsweise eine Information über einen Zeitpunkt der Übertragung der Bake aufweisen. Ferner (oder alternativ) kann die Signalisierungsinformation eine Information über eine Frequenz oder einen Frequenzkanal der Übertragung der Bake aufweisen. Ferner (oder alternativ) kann die Signalisierungsinformation eine Information über ein Zeit- und/oder Frequenzsprungmuster aufweisen, basierend auf dem die Bake übertragen wird. Mit anderen Worten, mit der Downlink-Datenübertragung können weitere Parameter, wie z.B. die Frequenz, das Sprungmuster, die Wiederholrate, usw., der Bake übertragen werden.

Bei Ausführungsbeispielen kann der Teilnehmer 106_1 ausgebildet sein, um eine asynchrone Uplink-Datenübertragung unter Verwendung des asynchronen Funknetzes zu der Basisstation zu senden und um zeitlich synchronisiert zu der gesendeten Uplink-Datenübertragung eine Downlink-Datenübertragung unter Verwendung des ersten Funknetzes von der Basisstation zu empfangen, wobei die Downlink-Datenübertragung eine Signalisierungsinformation aufweist, wobei der Teilnehmer ausgebildet ist, um basierend auf der Signalisierungsinformation eine Bake, die von der Basisstation unter Verwendung des synchronen Funknetzes gesendet wird, zu empfangen, um in das synchrone Funknetz zu wechseln (asynchroner Uplink --> asynchroner DL --> (synchrone) Bake).

Ausführungsbeispiele ermöglichen somit eine schnelle Anmeldung in einem synchronen System.

Gleichermaßen ist es auch möglich bei Verlust der Synchronisation diese wieder durch eine asynchrone Anfrage herzustellen. Wenn z.B. ein Teilnehmer (z.B. Knoten) für eine gewisse Zeit keine Bake (engl. Beacon) mehr empfangen hat, so kann der Teilnehmer ein asynchrone Uplink-Datenübertragung senden, um einerseits festzustellen ob das Netzwerk (z.B. die Basisstation 104) noch erreichbar ist und um andererseits wieder Synchronisationsinformationen (oder Signalisierungsinformationen) in der asynchronen Downlink-Datenübertragung (Downlink Antwort) zu erhalten.

Im Unterschied zu einer neuen Anmeldung (engl. Attachment) können hier alle ausgehandelten Parameter wie Schlüssel oder Adressen erhalten bleiben. Damit erfordert eine erneute Synchronisation (Resynchronisation) weniger Datenaustausch. Erhält der Teilnehmer (z.B. Knoten) asynchron keine Antwort kann er einen neuen Anmeldungsversuch starten, um ggf. einem anderen verfügbaren Netzwerk (Funknetz) beizutreten.

Bei Ausführungsbeispielen kann eine erneute Synchronisation (Resynchronisation) bei Synchronisationsverlust über eine asynchrone Uplink Anfrage und eine Downlink Antwort erfolgen.

### 5. Zeitweise Synchronisation eines asynchronen Systems

Oftmals gibt es bei der Basisstation 104 bestimmte Zeiten (sog. Spitzenzeiten, engl. High Peak Hours), zu denen viele Downlink-Datenübertragungen (z.B. Downlink Nachrichten) an die Teilnehmer 106_1-106_n zu verschicken sind (z.B. in Industriegebieten tagsüber oder in Wohngebieten morgens und abends) oder auch vereinzelt bei bestimmten Ereignissen (engl. Events) oder Großveranstaltungen.

Handelt es sich bei den übertragenden Daten um für jeden Teilnehmer (z.B. Knoten) individuelle Daten, kann die Kommunikation nicht über eine Multicast-Nachricht erfolgen.

Diese Spitzenzeiten (engl. High Peak Hours) stellen gerade in einem asynchronen System zwei Probleme dar, die es nicht möglich machen alle Teilnehmer 106_1-106_n mit den entsprechenden Daten zu versorgen. Zum einen stellt der maximal erlaubte Duty Cycle in den typischerweise verwendeten unlizenzierten Bändern ein Problem dar, da dieser begrenzt ist und damit nicht alle Teilnehmer 106_1-106_n zu den notwendigen Zeitpunkten im Downlink angesprochen werden können.

Aus dem oben genannten Problem der begrenzten Verfügbarkeit des Funkkanals, kann bei einer entsprechend hohen Anzahl an Teilnehmern 106_1-106_n somit weiterhin nicht gewährleistet werden, dass jeder Teilnehmer seine Daten in einem einzuhaltenden Zeitintervall auch erhält, da einzelne Nachrichten aufgrund der Duty Cycle Begrenzung verzögert werden müssen.

Bei hohen Lasten besitzt ein synchrones System den Vorteil, dass es während der Übertragung der Daten im Downlink eine sog. Carrier Aggregation durchführen kann. Dies ist möglich, da vorab den jeweiligen Teilnehmern exklusive Zeitschlitze und/oder Frequenzkanäle zugewiesen worden sind. Dadurch lassen sich zeitlich mehrere Übertragungen von der Basisstation 104 zu den Teilnehmern 106_1-106_n zusammenfassen, wodurch im Vergleich zum asynchronen System (oder Funknetz) der Kanal weniger stark belegt wird. Somit lassen sich bei einem synchronen System (oder Funknetz) mehr Teilnehmer 106_1-106_n mit dem gleichen Duty Cycle ansprechen, als bei einem asynchronen System (oder Funknetz).

Ein weiterer Vorteil des synchronen Systems (oder Funknetzes) bei hoher Auslastung liegt in den Möglichkeiten des Zeitplanens (engl. Scheduling). Wenn beispielsweise eine Nachricht im asynchronen System (oder Funknetz) aufgrund von Duty Cycle Beschränkungen nicht ausgesendet werden kann, muss die Basisstation 104 warten, bis von diesem Teilnehmer ein neuer Zeitpunkt zur Übertragung zur Verfügung steht (z.B. durch Senden einer Uplink-Datenübertragung (Uplink-Nachricht)). Dies ist der Basisstation 104 jedoch nicht bekannt und kann somit den maximal vorgegeben Zeitraum für eine Übermittlung übersteigen.

Im synchronen System (oder Funknetzen) kann dagegen einfach bei der nächsten Übertragung der Bake (engl. Beacon) dem entsprechenden Teilnehmer die anstehende Downlink-Datenübertragung (z.B. Downlink-Nachricht) mitgeteilt werden. Die Übertragungsdauern sind in der Basisstation 104 somit bekannt und können gezielt für das Zeitplanen (engl. Scheduling) genutzt werden, um gegebene einzuhaltende Übertragungsdauern zu gewährleisten.

Neben diesen Spitzenzeiten (engl. High Peak Hours) (z.B. Zeiten mit erhöhter oder maximaler Netzwerklast) gibt es aber auch Nicht-Spitzenzeiten (engl. Off Peak Hours) (z.B. Zeiten mit niedriger oder minimaler Netzwerklast) in denen verhältnismäßig wenig Nachrichten versendet werden. Dieser Fall ist für das asynchrone Netzwerk (Funknetz) bestens geeignet, da die Komplexität nur in der Basisstation 104 notwendig ist. Die Teilnehmer 106_1-106_n können so möglichst energieeffizient ihre Daten senden und empfangen da sie einfach bei Bedarf auf den Kanal zugreifen und sich nicht in gewissen Abständen auf eine Bake (engl. Beacon) synchronisieren und hören müssen.

Sind die Nicht-Spitzenzeiten (engl. Off Peak Hours) und die Spitzenzeiten (engl. High Peak Hours) vorab bekannt und verwenden beide parallel betriebenen Systeme (oder Funknetze) ein gemeinsames Netzwerk Management, lässt sich das Netzwerk (oder Kommunikationssystem 100) so steuern, dass während der Spitzenzeiten (engl. High Peak Hours) nur das synchrone System (oder Funknetz) verwendet wird und während der Nicht-Spitzenzeiten (engl. Off Peak Hours) nur das asynchrone System (oder Funknetz). So können die Vorteile beider Systeme (Funknetze) optimal genutzt werden.

Sind die Nicht-Spitzenzeiten (engl. Off Peak Hours) und die Spitzenzeiten (engl. High Peak Hours) vorab jedoch nicht bekannt ist es zwar auch möglich im dynamischen Betrieb alle Teilnehmer 106_1-106_n von dem asynchronen System (oder Funknetz) in das synchrone System (oder Funknetz) koordiniert werden. Durch den Umstand, dass die Teilnehmer 106_1-106_n im asynchronen Netz (Funknetz) nur nach speziellen Ereignissen (engl. Events) angesprochen werden können, kann dies jedoch eine gewisse Zeit dauern, bis alle Teilnehmer 106_1-106_n im synchronen Netz (Funknetz) eingebucht sind.

Ein Wechsel vom synchronen Netz (Funknetz) in das asynchrone Netz (Funknetz) ist hingegen jedoch jederzeit mittels einer Punkt-zu-Mehrpunkt-Datenübertragung (z.B. Multicast-Nachricht) problemlos ohne großen Zeitaufwand möglich.

Bei Ausführungsbeispielen kann zu hohen Duty-Cycle Zeiten von einem asynchronen System (oder Funknetz) auf ein synchrones System (oder Funknetz) gewechselt werden.

Bei Ausführungsbeispielen kann ein dynamischer oder geplanter Rückfall auf das asynchrone System (oder Funknetz), z.B. durch Abschalten der Bake, in Zeiten mit niedrigeren Downlink Aufkommen oder Latenzanforderungen etc.

Die oben beschriebenen Probleme des asynchronen Netzwerkes in den Spitzenzeiten (engl. High Peak Hours) beziehen sich ausschließlich auf den Downlink von der Basisstation 104 zu den Teilnehmern 106_1-106_n (z.B. Knoten).

Es ist somit auch möglich weiterhin asynchrone Uplink-Datenübertragungen (z.B. Uplink-Nachrichten) während der Spitzenzeiten (engl. High Peak Hours) zuzulassen und nur den Downlink mittels des synchronen Systems (oder Funknetzes) zu übertragen. Dies hat den Vorteil, dass nur Teilnehmer, welche auch eine Downlink-Datenübertragung erwarten (oder empfangen können, z. b. bidirektionale Teilnehmer (z.B. Knoten)) in das synchrone Netz (Funknetz) wechseln müssen. Dies erlaubt auch den durchgehenden Betrieb von Teilnehmern (z.B. Knoten), die nur asynchrone Übertragungen unterstützen.

Außerdem besteht die Möglichkeit, nur einen Teil (z.B. die Mehrheit) der Teilnehmer 106_1-106_n mittels des synchronen Systems (Funknetz) im Downlink mit Daten zu versorgen. Energiesparende Teilnehmer können weiterhin über das asynchrone Netz (Funknetz) versorgt werden.

Bei Ausführungsbeispielen kann zu hohen Duty-Cycle Zeiten der Downlink des Systems (oder Kommunikationssystems 100) durch das synchrone System (oder Funknetz) übertragen werden. Der Uplink kann weiterhin über das asynchrone Funknetz (z.B. mittels asynchroner Nachrichten) erfolgen.

Bei Ausführungsbeispielen können einzelne Teilnehmer, die energiesparend betrieben werden müssen, weiterhin über das asynchrone Funknetz mit Daten versorgt werden oder bei zeitunkritischen Anwendungen in die Nicht-Spitzenzeiten (engl. Off Peak Hours) verlegt werden.

Bei Ausführungsbeispielen kann, z.B. in ähnlicher Weise zu Abschnitt 4, der Uplink weiterhin asynchron von den Teilnehmern 106_1-106_n zur Basisstation 104 und der Downlink von der Basisstation 104 zu den Teilnehmern 106_1-106_n zeitweise synchron übertragen werden, so dass eine Mischform aus synchroner und asynchroner Übertragung im Downlink stattfindet.

So können die Teilnehmer 106_1-106_n wie bisher im asynchronen Netz (Funknetz) weiterhin Zeitpunkte (z.B. nach einer Uplink-Datenübertragung (z.B. Uplink-Nachricht)) definieren, zu denen eine teilnehmerspezifische Downlink-Datenübertragung (z.B. Downlink-Nachricht) möglich ist. Weiterhin können alle von der Basisstation 104 konfigurierten Teilnehmer zu vorgegeben Zeitpunkten (z.B. alle 30 Sekunden oder alle 15 Minuten) in den Kanal hören, ob dort eine Nachricht (z.B. eine Bake (engl. Beacon) oder eine Punkt-zu-Mehrpunkt-Datenübertragung (engl. Multicast)) vorhanden ist.

Damit hat die Basisstation 104 die Möglichkeit, dem Teilnehmer (z.B. Knoten) entweder individuell (für die Basisstation unbekannte Latenz) oder im Rahmen der Gruppennachricht (für die Basisstation bekannte Latenz) eine Nachricht im Downlink zukommen zu lassen. In der Gruppennachricht (z.B. Bake) kann ggf. signalisiert werden, für welche Teilnehmer nach der Gruppennachricht individuelle Daten anstehen.

Die Gruppennachricht kann auch als Punkt-zu-Mehrpunkt-Datenübertragung (z.B. Multicast-Nachricht) eingesetzt werden (z. B. für Firmware Updates).

Bei Ausführungsbeispielen kann der Uplink des kombinierten Systems (z.B. des Kommunikationssystems 100) rein asynchron durchgeführt werden. Im Downlink können die Teilnehmer 106_1-106_n (z.B. Knoten) sowohl asynchron als auch synchron mittels der regelmäßigen Gruppennachricht (z.B. Bake (engl. Beacon)) angesprochen werden.

Wird der Ansatz mit dem dualen Downlink eingesetzt, kann die Basisstation 104 in definierten regelmäßigen (bzw. bekannten Abständen) die Gruppennachricht (z.B. Bake (engl. Beacon)) aussenden, auch wenn sie keine Teilnehmer damit ansprechen möchte. Somit erfolgt eine Aussendung ohne nützlichen Inhalt, da keiner der Teilnehmer die Nachricht empfangen muss.

Sind die Abstände zwischen den Gruppennachrichten (z.B. Baken) periodisch (oder vorab auch für mehrere Aussendungen bekannt), ist es nicht notwendig jede anstehende Gruppennachricht auch tatsächlich auszusenden ("virtuelle Bake").

Somit hören alle Teilnehmer zum vereinbarten Zeitpunkt (und ggf. mit dem definierten Sprungmuster) in den Kanal. Wird dort keine Information empfangen, wissen Sie, dass keine Nachricht ausgesendet wurde. Wurde eine Nachricht empfangen, können Sie die Daten decodieren und entsprechend reagieren.

Diese Methodik dient dazu, dass die Basisstation 104 weniger Duty-Cycle im Downlink(Duty-Cycle-Begrenzung in den ISM und SRD-Bändern) benötigt, da wirklich nur bei Bedarf die Gruppennachricht (z.B. Bake) im Downlink ausgesendet wird.

Bei Ausführungsbeispielen kann die Gruppennachricht (z.B. Bake) im Downlink nur bei Bedarf ausgesendet werden.

### 6. Schlüsselaustausch

Bei einem synchronen Netzwerk (Funknetz) wird ein gemeinsamer Schlüssel benötigt, um Übertragungen für mehrere Teilnehmer 106_1-106_n verschlüsseln zu können. Es ist wünschenswert auch die Übertragung der Bake zu verschlüsseln, um keine Informationen über die Ressourcenzuteilung oder das Zeitplanen (engl. Scheduling) an Dritte zu geben. Diese Informationen könnten beispielsweise genutzt werden, um das Netzwerk gezielt zu stören oder um Metainformationen über die Aktivität von Teilnehmern 106_1-106_n zu erlangen.

Eine Verschlüsselung der Bake (also der Zeitplanungsinformationen (Schedulinginformationen)), macht es jedoch erforderlich, das neue Teilnehmer den gemeinsamen Schlüssel erhalten, bevor diese in der Lage sind koordiniert zu senden. Bei einem reinen synchronen System kann dieses Problem gelöst werden, indem eine spezielle Synchronisations-Bake verwendet wird, welche nicht verschlüsselt wird oder mit einem vorab festgelegten Schlüssel verschlüsselt wird.

In jedem Fall bedeutet dies, dass es nicht möglich ist die Synchronisationsinformationen netzwerkspezifisch gegen Dritte abzusichern. Dieses Problem kann durch einen Anmeldung (engl. Attach) über einen asynchronen Modus umgangen werden. Hierbei kann beispielsweise ein Individualschlüssel für den neuen Teilnehmer (z.B. Knoten) auf Basis eines beidseitig bekannten Geheimschlüssels (engl. preshared Secret) erzeugt werden. Der somit erlangte sichere Kanal zu dem Teilnehmer (z.B. Knoten) kann verwendet werden, um den gemeinsamen Schlüssel des Netzwerks oder von Gruppen innerhalb des Netzwerks zu übertragen.

Bei Ausführungsbeispielen kann eine Verteilung von gemeinsamen Schlüsseln über individuell gesicherte Verbindungen zu den Teilnehmern (z.B. Knoten) erfolgen.

Da der gemeinsame Schlüssel allen Teilnehmern bekannt ist, besteht eine erhöhte Gefahr, dass dieser kompromittiert wird und beispielsweise von Dritten verwendet wird um das Netzwerk (oder Funknetz) gezielt zu stören. Die individuell gesicherten Kommunikationskanäle zu den einzelnen Teilnehmern (z.B. Knoten) erlauben es auch im diesem Falle das Netzwerk aufrecht zu erhalten und mit einem neuen gemeinsamen Schlüssel wiederherzustellen.

Bei Ausführungsbeispielen können gemeinsame Schlüsseln über individuell gesicherte Verbindungen zu den Knoten aktualisiert werden, falls gemeinsame Schlüssel kompromittiert werden.

### 7. Weitere Ausführungsbeispiele

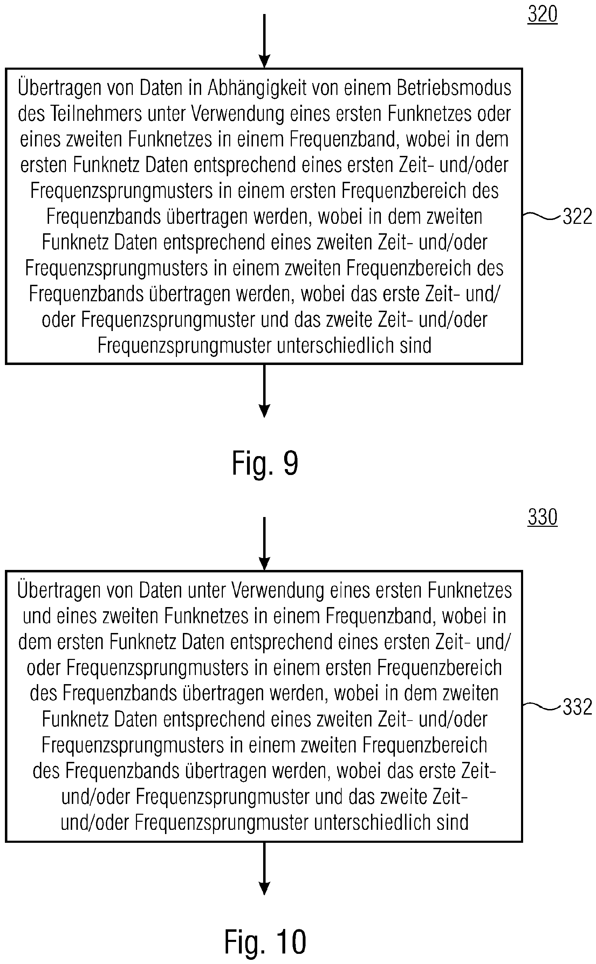

Fig. 9 zeigt ein Flussdiagramm eines Verfahrens 320 zum Betrieb eines Teilnehmers eines Kommunikationssystems, gemäß einem Ausführungsbeispiel der vorliegenden Erfindung. Das Verfahren 320 umfasst einen Schritt 322 des Übertragens von Daten in Abhängigkeit von einem Betriebsmodus des Teilnehmers unter Verwendung eines ersten Funknetzes oder eines zweiten Funknetzes in einem [z.B. im selben] Frequenzband [z.B. welches von einer Mehrzahl von Kommunikationssystemen genutzt wird; z.B. dem ISM Band], wobei in dem ersten Funknetz Daten entsprechend eines ersten Zeit- und/oder Frequenzsprungmusters in einem ersten Frequenzbereich des Frequenzbands übertragen werden, wobei in dem zweiten Funknetz Daten entsprechend eines zweiten Zeit- und/oder Frequenzsprungmusters in einem zweiten Frequenzbereich des Frequenzbands übertragen werden, wobei das erste Zeit- und/oder Frequenzsprungmuster und das zweite Zeit- und/oder Frequenzsprungmuster unterschiedlich sind, wobei sich der erste Frequenzbereich und der zweite Frequenzbereich zumindest teilweise überlappen.

Fig. 10 zeigt ein Flussdiagram eines Verfahrens 330 zum Betrieb einer Basisstation eines Kommunikationssystems, gemäß einem Ausführungsbeispiel der vorliegenden Erfindung. Das Verfahren 330 umfasst einen Schritt 332 des Übertragens von Daten unter Verwendung eines ersten Funknetzes und eines zweiten Funknetzes in einem [z.B. im selben] Frequenzband [z.B. welches von einer Mehrzahl von Kommunikationssystemen genutzt wird; z.B. dem ISM Band], wobei in dem ersten Funknetz Daten entsprechend eines ersten Zeit- und/oder Frequenzsprungmusters in einem ersten Frequenzbereich des Frequenzbands übertragen werden, wobei in dem zweiten Funknetz Daten entsprechend eines zweiten Zeit- und/oder Frequenzsprungmusters in einem zweiten Frequenzbereich des Frequenzbands übertragen werden, wobei das erste Zeit- und/oder Frequenzsprungmuster und das zweite Zeit- und/oder Frequenzsprungmuster unterschiedlich sind, wobei sich der erste Frequenzbereich und der zweite Frequenzbereich zumindest teilweise überlappen.

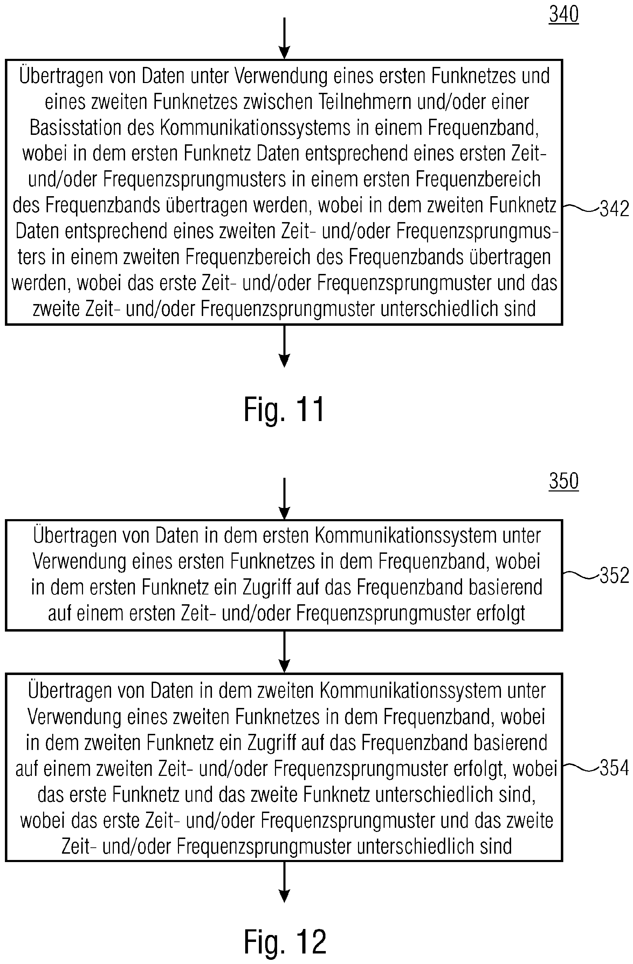

Fig. 11 zeigt ein Flussdiagram eines Verfahrens 340 zum Betrieb eines Kommunikationssystems, gemäß einem Ausführungsbeispiel der vorliegenden Erfindung. Das Verfahren 340 umfasst einen Schritt 342 des Übertragens von Daten unter Verwendung eines ersten Funknetzes und eines zweiten Funknetzes zwischen Teilnehmern und/oder einer Basisstation des Kommunikationssystems in einem Frequenzband [z.B. welches von einer Mehrzahl von Kommunikationssystemen genutzt wird; z.B. dem ISM Band], wobei in dem ersten Funknetz Daten entsprechend eines ersten Zeit- und/oder Frequenzsprungmusters in einem ersten Frequenzbereich des Frequenzbands übertragen werden, wobei in dem zweiten Funknetz Daten entsprechend eines zweiten Zeit- und/oder Frequenzsprungmusters in einem zweiten Frequenzbereich des Frequenzbands übertragen werden, wobei das erste Zeit- und/oder Frequenzsprungmuster und das zweite Zeit- und/oder Frequenzsprungmuster unterschiedlich sind, wobei sich der erste Frequenzbereich und der zweite Frequenzbereich zumindest teilweise überlappen.

Fig. 12 zeigt ein Flussdiagramm eines Verfahrens 350 zum Betreiben von zwei Kommunikationssystemen in einem Frequenzband, welches von einer Mehrzahl von Kommunikationssystemen zur drahtlosen Kommunikation genutzt wird, gemäß einem Ausführungsbeispiel der vorliegenden Erfindung. Das Verfahren 350 umfasst einen Schritt 352 des Übertragens von Daten in dem ersten Kommunikationssystem unter Verwendung eines ersten Funknetzes in dem Frequenzband [z.B. in einem ersten Frequenzbereich des Frequenzbands]. Das Verfahren 350 umfasst ferner einen Schritt 354 des Übertragens von Daten in dem zweiten Kommunikationssystem unter Verwendung eines zweiten Funknetzes in dem Frequenzband [z.B. in einem ersten Frequenzbereich des Frequenzbands], wobei in dem ersten Funknetz ein Zugriff auf das Frequenzband basierend auf einem ersten Zeit- und/oder Frequenzsprungmuster [z.B. Kanalzugriffsmuster] erfolgt, wobei in dem zweiten Funknetz ein Zugriff auf das Frequenzband basierend auf einem zweiten Zeit- und/oder Frequenzsprungmuster [z.B. Kanalzugriffsmuster] erfolgt, wobei das erste Funknetz und das zweite Funknetz unterschiedlich sind, wobei das erste Zeit- und/oder Frequenzsprungmuster und das zweite Zeit- und/oder Frequenzsprungmuster unterschiedlich sind, wobei das erste Zeit- und/oder Frequenzsprungmuster und das zweite Zeit- und/oder Frequenzsprungmuster so gewählt sind, dass ein Totalausfall einer Datenübertragung durch gegenseitige Störung vermieden wird.

Ausführungsbeispiele der vorliegenden Erfindung finden Anwendung in Systemen zur Funkübertragung von Daten von Endgeräten zu einer Basisstation oder von einer/mehrerer Basisstationen zu Endgeräten. Beispielsweise kann es sich bei einem System dabei um ein persönliches Netzwerk (engl. Personal Area Network, PAN) oder ein NiedrigenergieWeitverkehrsnetzwerk (engl. Low Power Wide Area Network, LPWAN) handeln, wobei die Endgeräte z.B. batteriebetriebene Sensoren (Sensorknoten) sein können.

Ausführungsbeispiele zielen auf Anwendungsfälle ab, in welchen eine Nachricht (Datenpaket) in mehreren Teil-Datenpaketen mittels des sogenannten Telegrammaufteilungs-Verfahrens (engl. Telegram-Splitting-Multiple-Access, TSMA) übertragen wird.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Literaturverzeichnis

[1] DE 10 2011 082 098 B4
[2] G. Kilian, H. Petkov, R. Psiuk, H. Lieske, F. Beer, J. Robert, and A. Heuberger, "Improved coverage for low-power telemetry systems using telegram splitting," in Proceedings of 2013 European Conference on Smart Objects, Systems and Technologies (SmartSysTech), 2013
[3] G. Kilian, M. Breiling, H. H. Petkov, H. Lieske, F. Beer, J. Robert, and A. Heuberger, "Increasing Transmission Reliability for Telemetry Systems Using Telegram Splitting," IEEE Transactions on Communications, vol. 63, no. 3, pp. 949-961, Mar. 2015
[4] https://www.pcwelt.de/ratgeber/Konflikte-zwischen-WLAN-und-Bluetooth-242893.html
[5] IEEE 802.15.4w Specification
[6] ETSI TS 103 357 Specification
[7] DE 10 2016 220882 A1

## Patentansprüche

1. Teilnehmer (106_1) eines Kommunikationssystems (100),
wobei der Teilnehmer (106_1) konfiguriert ist, um Daten unter Verwendung eines ersten Funknetzes und eines zweiten Funknetzes im selben Frequenzband (200) zu übertragen,
wobei der Teilnehmer (106_1) konfiguriert ist, um in dem ersten Funknetz Daten entsprechend eines ersten Zeit-Frequenzsprungmusters (202) in einem ersten Frequenzbereich (206) des Frequenzbands (200) zu übertragen,
wobei der Teilnehmer (106_1) konfiguriert ist, um in dem zweiten Funknetz Daten entsprechend eines zweiten Zeit-Frequenzsprungmusters (204) in einem zweiten Frequenzbereich (208) des Frequenzbands (200) zu übertragen,
wobei das erste Zeit-Frequenzsprungmuster (202) und das zweite Zeit-Frequenzsprungmuster (204) unterschiedlich sind,
wobei sich der erste Frequenzbereich (206) und der zweite Frequenzbereich (208) zumindest teilweise überlappen,
wobei das erste Funknetz ein asynchrones Funknetz ist, in dem Teilnehmer (106_1-106_n) des Kommunikationssystems (100) Daten zu beliebigen Zeitpunkten an die Basisstation (104) senden können,
wobei das zweite Funknetz ein synchrones Funknetz ist, in dem den Teilnehmern (106_1-106_n) exklusive Ressourcen zur Übertragung der Daten zugewiesen sind,
wobei der Teilnehmer (106_1) konfiguriert ist, um eine asynchrone Uplink-Datenübertragung unter Verwendung des ersten Funknetzes zu einer Basisstation (104) des Kommunikationssystems (100) zu senden und um zeitlich synchronisiert zu der gesendeten Uplink-Datenübertragung eine Downlink-Datenübertragung unter Verwendung des ersten Funknetzes von der Basisstation (104) zu empfangen, wobei die Downlink-Datenübertragung eine Signalisierungsinformation aufweist,
wobei der Teilnehmer (106_1) konfiguriert ist, um basierend auf der Signalisierungsinformation zumindest eine Bake, die von der Basisstation (104) unter Verwendung des zweiten Funknetzes gesendet wird, zu empfangen, um in das zweite Funknetz zu wechseln,
wobei die Signalisierungsinformation eine Information über einen Zeitpunkt und/oder über einen Frequenzkanal der zumindest einen Bake aufweist.

2. Teilnehmer (106_1) nach Anspruch 1,
wobei der Teilnehmer (106_1) konfiguriert ist, um während des Betriebs zwischen einem ersten Betriebsmodus, in dem der Teilnehmer (106_1) Daten unter Verwendung des ersten Funknetzes überträgt, und einem zweiten Betriebsmodus, in dem der Teilnehmer (106_1) Daten unter Verwendung des zweiten Funknetzes überträgt, zu wechseln,
und/oder
wobei der Teilnehmer (106_1) konfiguriert ist, um eine zur Kommunikation in dem zweiten Funknetz erforderliche Informationen unter Verwendung des ersten Funknetzes zu erhalten,
und/oder
wobei der Teilnehmer (106_1) konfiguriert ist, um eine zur Kommunikation in dem ersten Funknetz erforderliche Informationen unter Verwendung des zweiten Funknetzes zu erhalten.

3. Teilnehmer (106_1) nach einem der Ansprüche 1 bis 2,
wobei der Teilnehmer (106_1) konfiguriert ist, um Daten zu einer Basisstation (104) oder einem anderen Teilnehmer (106_2) des Kommunikationssystems (100) zu einem ersten Zeitpunkt unter Verwendung des ersten Funknetzes zu übertragen und um Daten zu derselben Basisstation (104) oder demselben anderen Teilnehmer (106_2) zu einem zweiten Zeitpunkt unter Verwendung des zweiten Funknetzes zu übertragen,
und/oder
wobei der Teilnehmer (106_1) ausgebildet ist, um Daten unter Verwendung des ersten Funknetzes zu senden und um Daten unter Verwendung des zweiten Funknetzes zu empfangen, oder wobei der Teilnehmer (106_1) ausgebildet ist, um Daten unter Verwendung des zweiten Funknetzes zu senden und um Daten unter Verwendung des ersten Funknetzes zu empfangen.

4. Teilnehmer (106_1) nach einem der Ansprüche 1 bis 3,
wobei die Signalisierungsinformation eine Information über zumindest einen Baken-Übertragungsparameter aufweist, wobei der zumindest eine Baken-Übertragungsparameter zumindest einer aus
- einem Zeit-/Frequenzsprungmuster der zumindest einen Bake,
- einer Berechnungsvorschrift für die Zeitpunkte und/oder Frequenzkanäle und/oder Zeit-/Frequenzsprungmuster der Übertragung der zumindest einen Bake,
- einem zeitlichen Abstand zwischen aufeinanderfolgenden Übertragungen der Bake,
- einer Berechnungsvorschrift für die zeitlichen Abstände zwischen aufeinanderfolgenden Übertragungen der Bake,
- einem kryptographischen Schlüssel für die Übertragung der Bake, und
- einer Berechnungsvorschrift zur Erzeugung eines kryptographischen Schlüssels für die Übertragung der zumindest einen Bake,
ist.

5. Teilnehmer (106_1) nach einem der Ansprüche 1 bis 4,
wobei der Teilnehmer (106_1) konfiguriert ist um bei Nichtempfang mindestens einer Bake, die unter Verwendung des zweiten Funksystems übertragen wird, eine erneute Uplink-Datenübertragung unter Verwendung des ersten Funknetzes zu der Basisstation (104) zu senden und um zeitlich synchronisiert zu der gesendeten Uplink-Datenübertragung eine weitere Downlink-Datenübertragung unter Verwendung des ersten Funknetzes von der Basisstation (104) zu empfangen, wobei die weitere Downlink-Datenübertragung eine Signalisierungsinformation aufweist,
wobei der Teilnehmer (106_1) konfiguriert ist, um basierend auf der Signalisierungsinformation erneut zumindest eine Bake, die von der Basisstation (104) unter Verwendung des zweiten Funknetzes gesendet wird, zu empfangen, um erneut in das zweite Funknetz zu wechseln.

6. Teilnehmer (106_1) nach einem der Ansprüche 1 bis 5,
wobei die Daten ein Datenpaket umfassen, wobei der Teilnehmer (106_1) konfiguriert ist, um das Datenpaket aufgeteilt auf eine Mehrzahl von Sub-Datenpaketen zu übertragen, wobei die Mehrzahl von Sub-Datenpaketen jeweils kürzer sind als das Datenpaket, wobei der Teilnehmer (106_1) konfiguriert ist, um die Mehrzahl von Sub-Datenpaketen entsprechend des jeweiligen Zeit-Frequenzsprungmusters (202, 204) zu übertragen.

7. Basisstation (104),
wobei die Basisstation (104) konfiguriert ist, um Daten unter Verwendung eines ersten Funknetzes und eines zweiten Funknetzes im selben Frequenzband (200) zu übertragen,
wobei die Basisstation (104) konfiguriert ist, um in dem ersten Funknetz Daten entsprechend eines ersten Zeit-Frequenzsprungmusters (202) in einem ersten Frequenzbereich (206) des Frequenzbands (200) zu übertragen,
wobei die Basisstation (104) konfiguriert ist, um in dem zweiten Funknetz Daten entsprechend eines zweiten Zeit-Frequenzsprungmusters (204) in einem zweiten Frequenzbereich (208) des Frequenzbands (200) zu übertragen,
wobei das erste Zeit-Frequenzsprungmuster (202) und das zweite Zeit-Frequenzsprungmuster (204) unterschiedlich sind,
wobei sich der erste Frequenzbereich (206) und der zweite Frequenzbereich (208) zumindest teilweise überlappen,
wobei das erste Funknetz ein asynchrones Funknetz ist, in dem Teilnehmer (106_1-106_n) des Kommunikationssystems (100) Daten zu beliebigen Zeitpunkten an die Basisstation (104) senden können,
wobei das zweite Funknetz ein synchrones Funknetz ist, in dem die Basisstation (104) den Teilnehmern (106_1-106_n) des Kommunikationssystems (100) exklusive Ressourcen zur Übertragung der Daten zuweist,
wobei die Basisstation (104) konfiguriert ist, um eine asynchrone Uplink-Datenübertragung von einem Teilnehmer (106_1) des Kommunikationssystems (100) unter Verwendung des ersten Funknetzes zu empfangen und um zeitlich synchronisiert zu der empfangenen Uplink-Datenübertragung eine Downlink-Datenübertragung zu dem Teilnehmer (106_1) unter Verwendung des ersten Funknetzes zu senden, wobei die Downlink-Datenübertragung eine Signalisierungsinformation über eine Übertragung zumindest einer Bake aufweist,
wobei die Basisstation (104) konfiguriert ist, um die zumindest eine Bake zur Synchronisation von Teilnehmern des zweiten Funknetzes unter Verwendung des zweiten Funknetzes zu senden,
wobei die Signalisierungsinformation eine Information über einen Zeitpunkt und/oder über einen Frequenzkanal der zumindest einen Bake aufweist.

8. Basisstation (104) nach Anspruch 7,
wobei die Basisstation (104) ausgebildet ist, um die zumindest eine Bake nur bei Bedarf auszusenden,
und/oder
wobei die Basisstation (104) konfiguriert ist, um einen Betrieb des ersten Funknetzes oder des zweiten Funknetzes zeitweise einzustellen,
und/oder
wobei die Basisstation (104) ausgebildet ist, um zur Übertragung von zu übertragenden Daten aus dem ersten Funknetz und dem zweiten Funknetz in Abhängigkeit von Übertragungsanforderungen der zu übertragenen Daten und/oder in Abhängigkeit von Betriebsparametern eines Teilnehmers des Kommunikationssystems, der die Daten empfangen soll, eines der Funknetze auszuwählen.

9. Basisstation (104) nach einem der Ansprüche 7 bis 8,
wobei die Signalisierungsinformation eine Information über zumindest einen Baken-Übertragungsparameter aufweist, wobei der zumindest eine Baken-Übertragungsparameter zumindest einer aus
- einem Zeit-/Frequenzsprungmuster der zumindest einen Bake,
- einer Berechnungsvorschrift für die Zeitpunkte und/oder Frequenzkanäle und/oder Zeit-/Frequenzsprungmuster der Übertragung der zumindest einen Bake,
- einem zeitlichen Abstand zwischen aufeinanderfolgenden Übertragungen der Bake,
- einer Berechnungsvorschrift für die zeitlichen Abstände zwischen aufeinanderfolgenden Übertragungen der Bake,
- einem kryptographischen Schlüssel für die Übertragung der Bake, und
- einer Berechnungsvorschrift zur Erzeugung eines kryptographischen Schlüssels für die Übertragung der zumindest einen Bake,
ist.

10. Basisstation (104) nach einem der Ansprüche 7 bis 9,
wobei die Basisstation (104) konfiguriert ist, um eine Mehrzahl von Baken unter Verwendung des zweiten Funknetzes in gewissen Intervallen auszusenden,
wobei die Signalisierungsinformation eine Information über die Übertragung zumindest einer nächsten Bake der Mehrzahl von Baken aufweist.

11. Basisstation (104) nach einem der Ansprüche 7 bis 10,
wobei die Basisstation (104) konfiguriert ist, um zumindest einen kryptographischen Schlüssel, der zur Verschlüsselung von Daten, die unter Verwendung des zweiten Funknetzes übertragen werden, unter Verwendung einer kryptographisch verschlüsselten Übertragung in dem ersten Funknetz zu erneuern und/oder abzuändern,
und/oder
wobei die Basisstation (104) konfiguriert ist, um gleichzeitig Daten unter Verwendung des ersten Funknetzes und des zweiten Funknetzes zu übertragen.

12. Basisstation (104) nach einem der Ansprüche 1 bis 11,
wobei die Basisstation (104) konfiguriert ist, um eine Signalisierungsinformation, die ein zu verwendendes Funknetz aus dem ersten Funknetz und dem zweiten Funknetz signalisiert, zu zumindest einen Teilnehmer (106_1) des Kommunikationssystems zu übertragen,
und/oder
wobei die Basisstation (104) ausgebildet ist, um eine Signalisierungsinformation, die eine Verfügbarkeit des ersten und/oder zweiten Funknetzes signalisiert, unter Verwendung des ersten und/oder zweiten Funknetzes an zumindest einen Teilnehmer (106_1) des Kommunikationssystems (100) zu übertragen,
und/oder
wobei die Basisstation (104) konfiguriert ist, um eine zur Kommunikation in dem zweiten Funknetz erforderliche Informationen unter Verwendung des ersten Funknetzes zu zumindest einem Teilnehmer (106_1) des Kommunikationssystems zu übertragen,
und/oder
wobei die Basisstation (104) konfiguriert ist, um eine zur Kommunikation in dem ersten Funknetz erforderliche Informationen unter Verwendung des zweiten Funknetzes zu zumindest einem Teilnehmer (106_1) des Kommunikationssystems zu übertragen.

13. Verfahren (320) zum Betrieb eines Teilnehmers (106_1) eines Kommunikationssystems (100), mit folgendem Schritt:
Übertragen (322) von Daten in Abhängigkeit von einem Betriebsmodus des Teilnehmers (106_1) unter Verwendung eines ersten Funknetzes oder eines zweiten Funknetzes im selben Frequenzband (200),
wobei in dem ersten Funknetz Daten entsprechend eines ersten Zeit-Frequenzsprungmusters (202) in einem ersten Frequenzbereich (206) des Frequenzbands (200) übertragen werden,
wobei in dem zweiten Funknetz Daten entsprechend eines zweiten Zeit-Frequenzsprungmusters (204) in einem zweiten Frequenzbereich (208) des Frequenzbands (200) übertragen werden,
wobei das erste Zeit-Frequenzsprungmuster (202) und das zweite Zeit-Frequenzsprungmuster (204) unterschiedlich sind,
wobei sich der erste Frequenzbereich (206) und der zweite Frequenzbereich (208) zumindest teilweise überlappen,
wobei das erste Funknetz ein asynchrones Funknetz ist, in dem Teilnehmer (106_1-106_n) des Kommunikationssystems (100) Daten zu beliebigen Zeitpunkten an die Basisstation (104) senden können,
wobei das zweite Funknetz ein synchrones Funknetz ist, in dem den Teilnehmern (106_1-106_n) exklusive Ressourcen zur Übertragung der Daten zugewiesen sind,
Senden einer asynchrone Uplink-Datenübertragung unter Verwendung des ersten Funknetzes zu einer Basisstation (104) des Kommunikationssystems (100),
Empfangen, zeitlich synchronisiert zu der gesendeten Uplink-Datenübertragung, einer Downlink-Datenübertragung unter Verwendung des ersten Funknetzes von der Basisstation (104), wobei die Downlink-Datenübertragung eine Signalisierungsinformation aufweist,
Empfangen, basierend auf der Signalisierungsinformation, zumindest einer Bake, die von der Basisstation (104) unter Verwendung des zweiten Funknetzes gesendet wird, um in das zweite Funknetz zu wechseln,
wobei die Signalisierungsinformation eine Information über einen Zeitpunkt und/oder über einen Frequenzkanal der zumindest einen Bake aufweist.

14. Verfahren (330) zum Betrieb einer Basisstation (104) eines Kommunikationssystems (100), mit folgendem Schritt:
Übertragen (332) von Daten unter Verwendung eines ersten Funknetzes und eines zweiten Funknetzes im selben Frequenzband (200),
wobei in dem ersten Funknetz Daten entsprechend eines ersten Zeit-Frequenzsprungmusters (202) in einem ersten Frequenzbereich (206) des Frequenzbands (200) übertragen werden,
wobei in dem zweiten Funknetz Daten entsprechend eines zweiten Zeit-Frequenzsprungmusters (204) in einem zweiten Frequenzbereich (208) des Frequenzbands (200) übertragen werden,
wobei das erste Zeit-Frequenzsprungmuster (202) und das zweite Zeit-Frequenzsprungmuster (204) unterschiedlich sind,
wobei sich der erste Frequenzbereich (206) und der zweite Frequenzbereich (208) zumindest teilweise überlappen,
wobei das erste Funknetz ein asynchrones Funknetz ist, in dem Teilnehmer (106_1-106_n) des Kommunikationssystems (100) Daten zu beliebigen Zeitpunkten an die Basisstation (104) senden können,
wobei das zweite Funknetz ein synchrones Funknetz ist, in dem den Teilnehmern (106_1-106_n) exklusive Ressourcen zur Übertragung der Daten zugewiesen sind,
Empfangen einer asynchrone Uplink-Datenübertragung von einem Teilnehmer (106_1) des Kommunikationssystems (100) unter Verwendung des ersten Funknetzes,
Senden, zeitlich synchronisiert zu der empfangenen Uplink-Datenübertragung, einer Downlink-Datenübertragung zu dem Teilnehmer (106_1) unter Verwendung des ersten Funknetztes, wobei die Downlink-Datenübertragung eine Signalisierungsinformation über eine Übertragung zumindest einer Bake aufweist,
Senden der zumindest einen Bake zur Synchronisation von Teilnehmern des zweiten Funknetzes unter Verwendung des zweiten Funknetzes,
wobei die Signalisierungsinformation eine Information über einen Zeitpunkt und/oder über einen Frequenzkanal der zumindest einen Bake aufweist.

15. Computerprogramm zur Durchführung des Verfahrens gemäß einem der Ansprüche 13 oder 14, wenn das Computerprogram auf einem Computer oder Mikroprozessor abläuft.

## Claims

1. A participant (106_1) of a communication system (100),
wherein the participant (106_1) is configured to transmit data using a first radio network and a second radio network in the same frequency band (200),
wherein the participant (106_1) is configured to transmit data in the first radio network according to a first time/frequency hopping pattern (202) in a first frequency range (206) of the frequency band (200),
wherein the participant (106_1) is configured to transmit data in the second radio network according to a second time/frequency hopping pattern (204) in a second frequency range (208) of the frequency band (200),
wherein the first time/frequency hopping pattern (202) and the second time/frequency hopping pattern (204) are different,
wherein the first frequency range (206) and the second frequency range (208) overlap at least partially,
wherein the first radio network is an asynchronous radio network in which participants (106_1-106_n) of the communication system (100) are able to transmit data to the base station (104) at any points in time,
wherein the second radio network is a synchronous radio network in which exclusive resources to transmit the data are allocated to the participants (106_1-106_n),
wherein the participant (106_1) is configured to transmit an asynchronous uplink data transmission to a base station (104) of the communication system (100) using the first radio network and to receive a downlink data transmission from the base station (104) synchronized in time with the transmitted uplink data transmission using the first radio network, the downlink data transmission comprising signaling information,
wherein the participant (106_1) is configured to receive, based on the signaling information, at least one beacon transmitted by the base station (104) using the second radio network to switch to the second radio network,
wherein the signaling information comprise information on a point in time and/or on a frequency channel of the at least one beacon.

2. The participant (106_1) according to claim 1,
wherein the participant (106_1) is configured to switch during operation between a first operating mode in which the participant (106_1) transmits data using the first radio network, and a second operating mode in which the participant (106_1) transmits data using the second radio network,
and/or
wherein the participant (106_1) is configured to obtain information required for communication in the second radio network, using the first radio network,
and/or
wherein the participant (106_1) is configured to obtain information required for communication in the first radio network, using the second radio network.

3. The participant (106_1) according to any of claims 1 to 2,
wherein the participant (106_1) is configured to transmit data to a base station (10s) or another participant (106_2) of the communication system (100) at a first point in time using the first radio network and to transmit data to the same base station (104) or the same other participant (106_2) at a second point in time using the second radio network,
and/or
wherein the participant (106_1) is configured to transmit data using the first radio network and to receive data using the second radio network, or wherein the participant (106_1) is configured to transmit data using the second radio network and to receive data using the first radio network.

4. The participant (106_1) according to any of claims 1 to 3,
wherein the signaling information comprise information on at least one beacon transmission parameter, the at least one beacon transmission parameter being at least one of:
- a time/frequency hopping pattern of the at least one beacon,
- a calculation rule for the points in time and/or frequency channels and/or time/frequency hopping patterns of the transmission of the at least one beacon,
- a time interval between successive transmissions of the beacon,
- a calculation rule for the time intervals between successive transmissions of the beacon,
- a cryptographic key for the transmission of the beacon, and
- a calculation rule for generating a cryptographic key for the transmission of the at least one beacon.

5. The participant (106_1) according to any of claims 1 to 4,
wherein the participant (106_1) is configured to transmit a new uplink data transmission to the base station (104) using the first radio network upon non-reception of at least one beacon transmitted using the second radio system, and to receive a further downlink data transmission from the base station (104) synchronized in time with the transmitted uplink data transmission using the first radio network, the further downlink data transmission comprising signaling information,
wherein the participant (106_1) is configured to receive again, based on the signaling information, at least one beacon transmitted by the base station (104) using the second radio network to switch again to the second radio network.

6. The participant (106_1) according to any of claims 1 to 5,
wherein the data comprise a data packet, the participant (106_1) being configured to transmit the data packet divided into a plurality of sub-data packets, the plurality of sub-data packets each being shorter than the data packet, the participant (106_1) being configured to transmit the plurality of sub-data packets according to the respective time/frequency hopping pattern (202, 204).

7. A base station (104),
wherein the base station (104) is configured to transmit data using a first radio network and a second radio network in the same frequency band (200),
wherein the base station (104) is configured to transmit data in the first radio network according to a first time/frequency hopping pattern (202) in a first frequency range (206) of the frequency band (200),
wherein the base station (104) is configured to transmit data in the second radio network according to a second time/frequency hopping pattern (204) in a second frequency range (208) of the frequency band (200),
wherein the first time/frequency hopping pattern (202) and the second time/frequency hopping pattern (204) are different,
wherein the first frequency range (206) and the second frequency range (208) overlap at least partially,
wherein the first radio network is an asynchronous radio network in which participants (106_1-106_n) of the communication system (100) are able to transmit data to the base station (104) at any points in time,
wherein the second radio network is a synchronous radio network in which the base station (104) allocates exclusive resources to transmit the data to the participants (106_1-106_n) of the communication system (100),
wherein the base station (104) is configured to receive an asynchronous uplink data transmission from a participant (106_1) of the communication system (100) using the first radio network and to transmit a downlink data transmission to the participant (106_1) synchronized in time with the received uplink data transmission using the first radio network, the downlink data transmission comprising signaling information on a transmission of at least one beacon,
wherein the base station (104) is configured to transmit the at least one beacon for synchronizing participants of the second radio network using the second radio network,
wherein the signaling information comprise information on a point in time and/or on a frequency channel of the at least one beacon.

8. The base station (104) according to claim 7,
wherein the base station (104) is configured to transmit the at least one beacon only when required,
and/or
wherein the base station (104) is configured to temporarily cease operation of the first radio network or the second radio network,
and/or
wherein the base station (104) is configured to select one of the radio networks for transmitting data to be transmitted from the first radio network and the second radio network in dependence on transmission requirements of the data to be transmitted and/or in dependence on operating parameters of a participant of the communication system which is to receive the data.

9. The base station (104) according to any of claims 7 to 8,
wherein the signaling information comprise information on at least one beacon transmission parameter, the at least one beacon transmission parameter being at least one of:
- a time/frequency hopping pattern of the at least one beacon,
- a calculation rule for the points in time and/or frequency channels and/or time/frequency hopping patterns of the transmission of the at least one beacon,
- a time interval between successive transmissions of the beacon,
- a calculation rule for the time intervals between successive transmissions of the beacon,
- a cryptographic key for the transmission of the beacon, and
- a calculation rule for generating a cryptographic key for the transmission of the at least one beacon.

10. The base station (104) according to any of claims 7 to 9,
wherein the base station (104) is configured to emit a plurality of beacons using the second radio network at certain intervals,
wherein the signaling information comprise information on the transmission of at least one next beacon of the plurality of beacons.

11. The base station (104) according to any of claims 7 to 10,
wherein the base station (104) is configured to renew and/or modify at least one cryptographic key used to encrypt data transmitted using the second radio network, using a cryptographically encrypted transmission in the first radio network,
and/or
wherein the base station (104) is configured to simultaneously transmit data using the first radio network and the second radio network.

12. The base station (104) according to any of claims 1 to 11,
wherein the base station (104) is configured to transmit signaling information signaling a radio network to be used from the first radio network and the second radio network, to at least one participant (106_1) of the communication system,
and/or
wherein the base station (104) is configured to transmit signaling information signaling availability of the first and/or second radio network to at least one participant (106_1) of the communication system (100), using the first and/or second radio network,
and/or
wherein the base station (104) is configured to transmit information required for communication in the second radio network to at least one participant (106_1) of the communication system using the first radio network,
and/or
wherein the base station (104) is configured to transmit information required for communication in the first radio network to at least one participant (106_1) of the communication system using the second radio network.

13. A method (320) of operating a participant (106_1) of a communication system (100), comprising the step of:
transmitting (322) data in dependence on an operating mode of the participant (106_1) using a first radio network or a second radio network in the same frequency band(200),
wherein, in the first radio network, data are transmitted according to a first time/frequency hopping pattern (202) in a first frequency range (206) of the frequency band (200),
wherein, in the second radio network, data are transmitted according to a second time/frequency hopping pattern (204) in a second frequency range (208) of the frequency band (200),
wherein the first time/frequency hopping pattern (202) and the second time/frequency hopping pattern (204) are different,
wherein the first frequency range (206) and the second frequency range (208) overlap at least partially,
wherein the first radio network is an asynchronous radio network in which participants (106_1-106_n) of the communication system (100) are able to transmit data to the base station (104) at any points in time,
wherein the second radio network is a synchronous radio network in which exclusive resources to transmit the data are allocated to the participants (106_1-106_n), transmitting an asynchronous uplink data transmission to a base station (104) of the communication system (100) using the first radio network,
receiving a downlink data transmission from the base station (104) synchronized in time with the transmitted uplink data transmission using the first radio network, the downlink data transmission comprising signaling information,
receiving, based on the signaling information, at least one beacon transmitted by the base station (104) using the second radio network to switch to the second radio network,
wherein the signaling information comprise information on a point in time and/or on a frequency channel of the at least one beacon.

14. A method (330) of operating a base station (104) of a communication system (100), comprising the step of:
transmitting (332) data using a first radio network and a second radio network in the same frequency band(200),
wherein, in the first radio network, data are transmitted according to a first time/frequency hopping pattern (202) in a first frequency range (206) of the frequency band (200),
wherein, in the second radio network, data are transmitted according to a second time/frequency hopping pattern (204) in a second frequency range (208) of the frequency band (200),
wherein the first time/frequency hopping pattern (202) and the second time/frequency hopping pattern (204) are different,
wherein the first frequency range (206) and the second frequency range (208) overlap at least partially,
wherein the first radio network is an asynchronous radio network in which participants (106_1-106_n) of the communication system (100) are able to transmit data to the base station (104) at any points in time,
wherein the second radio network is a synchronous radio network in which exclusive resources to transmit the data are allocated to the participants (106_1-106_n),
receiving an asynchronous uplink data transmission from a participant (106_1) of the communication system (100) using the first radio network,
transmitting a downlink data transmission to the participant (106_1) synchronized in time with the received uplink data transmission using the first radio network, the downlink data transmission comprising signaling information on a transmission of at least one beacon,
transmitting the at least one beacon for synchronizing participants of the second radio network, using the second radio network,
wherein the signaling information comprise information on a point in time and/or on a frequency channel of the at least one beacon.

15. A computer program for performing the method according to any of claims 13 or 14, when the computer program runs on a computer or microprocessor.

## Revendications

1. Abonné (106_1) d'un système de communication (100),
dans lequel l'abonné (106_1) est configuré pour transmettre des données à l'aide d'un premier réseau radio et d'un deuxième réseau radio dans la même bande de fréquences (200),
dans lequel l'abonné (106_1) est configuré pour transmettre des données dans le premier réseau radio selon un premier modèle de saut en temps-fréquence (202) dans une première plage de fréquences (206) de la bande de fréquences (200),
dans lequel l'abonné (106_1) est configuré pour transmettre des données dans le deuxième réseau radio selon un deuxième modèle de saut en temps-fréquence (204) dans une deuxième plage de fréquences (208) de la bande de fréquences (200),
dans lequel le premier modèle de saut en temps-fréquence (202) et le deuxième modèle de saut en temps-fréquence (204) sont différents,
dans lequel la première plage de fréquences (206) et la deuxième plage de fréquences (208) se chevauchent au moins partiellement,
dans lequel le premier réseau radio est un réseau radio asynchrone dans lequel les abonnés (106_1 à 106_n) du système de communication (100) peuvent envoyer des données à la station de base (104) à tout moment,
dans lequel le deuxième réseau radio est un réseau radio synchrone dans lequel sont associées aux abonnés (106_1 à 106_n) des ressources exclusives pour la transmission des données,
dans lequel l'abonné (106_1) est configuré pour envoyer une transmission de données en liaison montante asynchrone à l'aide du premier réseau radio à une station de base (104) du système de communication (100) et pour recevoir de la station de base (104), de manière synchronisée dans le temps avec la transmission de données en liaison montante envoyée, une transmission de données en liaison descendante à l'aide du premier réseau radio, dans lequel la transmission de données en liaison descendante présente une première information de signalisation,
dans lequel l'abonné (106_1) est configuré pour recevoir, sur base de l'information de signalisation, au moins une balise qui est envoyée par la station de base (104) à l'aide du deuxième réseau radio pour changer au deuxième réseau radio,
dans lequel l'information de signalisation présente une information relative à un moment et/ou relative à un canal de fréquence de l'au moins une balise.

2. Abonné (106_1) selon la revendication 1,
dans lequel l'abonné (106_1) est configuré pour changer pendant le fonctionnement entre un premier mode de fonctionnement, dans lequel l'abonné (106_1) transmet des données à l'aide du premier réseau radio, et un deuxième mode de fonctionnement, dans lequel l'abonné (106_1) transmet des données à l'aide du deuxième réseau radio,
et/ou
dans lequel l'abonné (106_1) est configuré pour obtenir, à l'aide du premier réseau radio, des informations nécessaires pour la communication dans le deuxième réseau radio,
et/ou
dans lequel l'abonné (106_1) est configuré pour obtenir, à l'aide du deuxième réseau radio, les informations nécessaires pour la communication dans le premier réseau radio.

3. Abonné (106_1) selon l'une des revendications 1 à 2,
dans lequel l'abonné (106_1) est configuré pour transmettre des données à une station de base (104) ou à un autre abonné (106_2) du système de communication (100) à un premier moment à l'aide du premier réseau radio et pour transmettre des données à la même station de base (104) ou au même autre abonné (106_2) à un deuxième moment à l'aide du deuxième réseau radio,
et/ou
dans lequel l'abonné (106_1) est conçu pour envoyer des données à l'aide du premier réseau radio et pour recevoir des données à l'aide du deuxième réseau radio, ou dans lequel l'abonné (106_1) est conçu pour envoyer des données à l'aide du deuxième réseau radio et pour recevoir des données à l'aide du premier réseau radio.

4. Abonné (106_1) selon l'une des revendications 1 à 3,
dans lequel l'information de signalisation présente une information relative à au moins un paramètre de transmission de balise, dans lequel l'au moins un paramètre de transmission de balise consiste en au moins un
- un modèle de saut en temps-fréquence de l'au moins une balise,
- une règle de calcul pour les moments et/ou les canaux de fréquence et/ou le modèle de saut en temps-fréquence de la transmission de l'au moins une balise,
- une distance dans le temps entre transmissions successives de la balise,
- une règle de calcul pour les distances de temps entre transmissions successives de la balise,
- une clé cryptographique pour la transmission de la balise, et
- une règle de calcul pour la génération d'une clé cryptographique pour la transmission de l'au moins une balise.

5. Abonné (106_1) selon l'une des revendications 1 à 4,
dans lequel l'abonné (106_1) est configuré pour envoyer, en cas de non-réception d'au moins une balise qui est transmise à l'aide du deuxième système radio, une nouvelle transmission de données en liaison montante à l'aide du premier réseau radio à la station de base (104) et pour recevoir de la station de base (104), de manière synchronisée dans le temps avec la transmission de données en liaison montante envoyée, une autre transmission de données en liaison descendante à l'aide du premier réseau radio, dans lequel l'autre transmission de données en liaison descendante présente une information de signalisation,
dans lequel l'abonné (106_1) est configuré pour recevoir à nouveau, sur base de l'information de signalisation, au moins une balise qui est envoyée par la station de base (104) à l'aide du deuxième réseau radio, pour changer à nouveau au deuxième réseau radio.

6. Abonné (106_1) selon l'une des revendications 1 à 5,
dans lequel les données comportent un paquet de données, dans lequel l'abonné (106_1) est configuré pour transmettre le paquet de données divisé en une pluralité de sous-paquets de données, dans lequel la pluralité de sous-paquets de données sont, chacun, plus courts que le paquet de données, dans lequel l'abonné (106_1) est configuré pour transmettre la pluralité de sous-paquets de données selon le modèle de saut en temps-fréquence respectif (202, 204).

7. Station de base (104),
dans laquelle la station de base (104) est configurée pour transmettre des données à l'aide d'un premier réseau radio et d'un deuxième réseau radio dans la même bande de fréquences (200),
dans laquelle la station de base (104) est configurée pour transmettre, dans le premier réseau radio, des données selon un premier modèle de saut en temps-fréquence (202) dans une première plage de fréquences (206) de la bande de fréquences (200),
dans laquelle la station de base (104) est configurée pour transmettre, dans le deuxième réseau radio, des données selon un deuxième modèle de saut en temps-fréquence (204) dans une deuxième plage de fréquences (208) de la bande de fréquences (200),
dans laquelle le premier modèle de saut en temps-fréquence (202) et le deuxième modèle de saut en temps-fréquence (204) sont différents,
dans laquelle la première plage de fréquences (206) et la deuxième plage de fréquences (208) se chevauchent au moins partiellement,
dans laquelle le premier réseau radio est un réseau radio asynchrone dans lequel les abonnés (106_1 à 106_n) du système de communication (100) peuvent envoyer des données à la station de base (104) à tout moment,
dans laquelle le deuxième réseau radio est un réseau radio synchrone dans lequel la station de base (104) attribue des ressources exclusives aux abonnés (106_1 à 106_n) du système de communication (100) pour la transmission des données,
la station de base (104) est configurée pour recevoir une transmission de données en liaison montante asynchrone d'un abonné (106_1) du système de communication (100) à l'aide du premier réseau radio et pour envoyer, de manière synchronisée dans le temps avec la transmission de données en liaison montante reçue, une transmission de données en liaison descendante à l'abonné (106_1) à l'aide du premier réseau radio, dans laquelle la transmission de données en liaison descendante présente une information de signalisation relative à une transmission d'au moins une balise,
dans laquelle la station de base (104) est configurée pour envoyer l'au moins une balise pour la synchronisation des abonnés du deuxième réseau radio à l'aide du deuxième réseau radio,
dans laquelle l'information de signalisation présente une information relative à un moment et/ou relative à un canal de fréquence de l'au moins une balise.

8. Station de base (104) selon la revendication 7,
dans laquelle la station de base (104) est conçue pour envoyer l'au moins une balise uniquement en cas de nécessité,
et/ou
dans laquelle la station de base (104) est configurée pour régler temporairement un fonctionnement du premier réseau radio ou du deuxième réseau radio,
et/ou
dans laquelle la station de base (104) est conçue pour sélectionner, pour la transmission des données à transmettre à partir du premier réseau radio et du deuxième réseau radio en fonction des conditions requises de transmission des données à transmettre et/ou en fonction des paramètres de fonctionnement d'un abonné du système de communication qui doit recevoir les données, un des réseaux radio.

9. Station de base (104) selon l'une des revendications 7 à 8,
dans laquelle l'information de signalisation présente une information relative à au moins un paramètre de transmission de balise, dans laquelle l'au moins un paramètre de transmission de balise consiste en au moins un
- un modèle de saut en temps-fréquence de l'au moins une balise,
- une règle de calcul pour les moments et/ou les canaux de fréquence et/ou le modèle de saut en temps-fréquence de la transmission de l'au moins une balise,
- une distance dans le temps entre transmissions successives de la balise,
- une règle de calcul pour les distances de temps entre transmissions successives de la balise,
- une clé cryptographique pour la transmission de la balise, et
- une règle de calcul pour la génération d'une clé cryptographique pour la transmission de l'au moins une balise.

10. Station de base (104) selon l'une des revendications 7 à 9,
dans laquelle la station de base (104) est configurée pour émettre une pluralité de balises à l'aide du deuxième réseau radio à certains intervalles,
dans laquelle l'information de signalisation présente une information relative à la transmission d'au moins une balise suivante de la pluralité de balises.

11. Station de base (104) selon l'une des revendications 7 à 10,
dans laquelle la station de base (104) est configurée pour renouveler et/ou modifier au moins une clé cryptographique qui est utilisée pour crypter des données qui sont transmises à l'aide du deuxième réseau radio à l'aide d'une transmission cryptée de manière cryptographique dans le premier réseau radio,
et/ou
dans laquelle la station de base (104) est configurée pour transmettre simultanément des données à l'aide du premier réseau radio et du deuxième réseau radio.

12. Station de base (104) selon l'une des revendications 1 à 11,
dans laquelle la station de base (104) est configurée pour transmettre à au moins un abonné (106_1) du système de communication une information de signalisation qui signale un réseau radio à utiliser parmi le premier réseau radio et le deuxième réseau radio,
et/ou
dans laquelle la station de base (104) est conçue pour transmettre à au moins un abonné (106_1) du système de communication (100) une information de signalisation qui signale une disponibilité du premier et/ou du deuxième réseau radio à l'aide du premier et/ou du deuxième réseau radio,
et/ou
dans laquelle la station de base (104) est configurée pour transmettre, à l'aide du premier réseau radio, les informations nécessaires pour la communication dans le deuxième réseau radio à au moins un abonné (106_1) du système de communication,
et/ou
dans laquelle la station de base (104) est configurée pour transmettre, à l'aide du deuxième réseau radio, les informations nécessaires pour la communication dans le premier réseau radio à au moins un abonné (106_1) du système de communication.

13. Procédé (320) permettant de faire fonctionner un abonné (106_1) d'un système de communication (100), à l'étape suivante consistant à:
transmettre (322) des données en fonction d'un mode de fonctionnement de l'abonné (106_1) à l'aide d'un premier réseau radio ou d'un deuxième réseau radio dans la même bande de fréquences (200),
dans lequel, dans le premier réseau radio, les données sont transmises selon un premier modèle de saut en temps-fréquence (202) dans une première plage de fréquences (206) de la bande de fréquences (200),
dans lequel, dans le deuxième réseau radio, les données sont transmises selon un deuxième modèle de saut en temps-fréquence (204) dans une deuxième plage de fréquences (208) de la bande de fréquences (200),
dans lequel le premier modèle de saut en temps-fréquence (202) et le deuxième modèle de saut en temps-fréquence (204) sont différents,
dans lequel la première plage de fréquences (206) et la deuxième plage de fréquences (208) se chevauchent au moins partiellement,
dans lequel le premier réseau radio est un réseau radio asynchrone dans lequel les abonnés (106_1 à 106_n) du système de communication (100) peuvent envoyer des données à la station de base (104) à tout moment,
dans lequel le deuxième réseau radio est un réseau radio synchrone dans lequel sont attribuées aux abonnés (106_1 à 106_n) des ressources exclusives pour la transmission des données,
envoyer une transmission de données en liaison montante asynchrone à l'aide du premier réseau radio à une station de base (104) du système de communication (100),
recevoir de la station de base (104), de manière synchronisée dans le temps avec la transmission de données en liaison montante envoyée, une transmission de données en liaison descendante à l'aide du premier réseau radio, dans lequel la transmission de données en liaison descendante présente une information de signalisation,
recevoir, sur base de l'information de signalisation, au moins une balise qui est envoyée par la station de base (104) à l'aide du deuxième réseau radio, pour changer au deuxième réseau radio,
dans lequel l'information de signalisation présente une information relative à un moment et/ou relative à un canal de fréquence de l'au moins une balise.

14. Procédé (330) permettant de faire fonctionner une station de base (104) d'un système de communication (100), à l'étape suivante consistant à:
transmettre (332) des données à l'aide d'un premier réseau radio et d'un deuxième réseau radio dans la même bande de fréquences (200),
dans lequel, dans le premier réseau radio, les données sont transmises selon un premier modèle de saut en temps-fréquence (202) dans une première plage de fréquences (206) de la bande de fréquences (200),
dans lequel, dans le deuxième réseau radio, les données sont transmises selon un deuxième modèle de saut en temps-fréquence (204) dans une deuxième plage de fréquences (208) de la bande de fréquences (200),
dans lequel le premier modèle de saut en temps-fréquence (202) et le deuxième modèle de saut en temps-fréquence (204) sont différents,
dans lequel la première plage de fréquences (206) et la deuxième plage de fréquences (208) se chevauchent au moins partiellement,
dans lequel le premier réseau radio est un réseau radio asynchrone dans lequel les abonnés (106_1 à 106_n) du système de communication (100) peuvent envoyer des données à la station de base (104) à tout moment,
dans lequel le deuxième réseau radio est un réseau radio synchrone dans lequel sont attribuées aux abonnés (106_1 à 106_n) des ressources exclusives pour la transmission des données,
recevoir une transmission de données en liaison montante asynchrones d'un abonné (106_1) du système de communication (100) à l'aide du premier réseau radio,
envoyer à l'abonné (106_1), de manière synchronisée dans le temps avec la transmission de données en liaison montante reçue, une transmission de données en liaison descendante à l'aide du premier réseau radio, où la transmission de données en liaison descendante présente une information de signalisation relative à une transmission d'au moins une balise,
envoyer l'au moins une balise pour la synchronisation des abonnés du deuxième réseau radio à l'aide du deuxième réseau radio,
dans lequel l'information de signalisation présente une information relative à un moment et/ou relative à un canal de fréquence de l'au moins une balise.

15. Programme d'ordinateur pour mettre en oeuvre le procédé selon l'une des revendications 13 ou 14 lorsque le programme d'ordinateur est exécuté sur un ordinateur ou un microprocesseur.
